# EUROPÄISCHE PATENTSCHRIFT

(11) **EP 2 310 980 B1**
(45) Veröffentlichungstag und Bekanntmachung des Hinweises auf die Patenterteilung: **06.03.2013**
(21) Anmeldenummer: 09781435.4
(22) Anmeldetag: 03.08.2009
(51) Int. Cl.: G06K 7/14, G06K 19/06

(54) **CODIERUNGSVERFAHREN ZUR CODIERUNG MEDIZINISCHER ARTIKEL**
ENCRYPTION METHOD FOR ENCODING MEDICAL ARTICLES
PROCÉDÉ DE CODAGE DESTINÉ AU CODAGE D'ARTICLES MÉDICAUX

(30) Priorität: 04.08.2008 EP 08161756
(43) Veröffentlichungstag der Anmeldung: 20.04.2011
(73) Patentinhaber: Roche Diagnostics GmbH, 68305 Mannheim (DE); F. Hoffmann-La Roche AG, 4070 Basel (CH)
(72) Erfinder: PETRICH, Wolfgang, 76669 Bad Schönborn (DE); KALVERAM, Stefan, 68519 Viernheim (DE); SERR, Markus, 67346 Speyer (DE)
(74) Vertreter: Stößel, Matthias
(86) Internationale Anmeldenummer: PCT/EP2009/060046
(87) Internationale Veröffentlichungsnummer: WO 2010/015606

(56) Entgegenhaltungen:
- WO-A-96/30217
- DE-A1- 10 123 406
- US-A- 4 924 078
- US-A- 5 077 010

## Beschreibung

### Gebiet der Erfindung

Die Erfindung betrifft ein Codierungsverfahren zum Erzeugen mindestens einer Codierung auf einem Artikel, sowie ein entsprechendes Decodierungsverfahren und Codier- und Decodiervorrichtungen. Derartige Verfahren und Vorrichtungen können insbesondere im Bereich der medizinischen Einwegartikel eingesetzt werden, um derartige Einwegartikel schnell und zuverlässig mit einem Code zu versehen. Insbesondere, jedoch nicht ausschließlich, lassen sich derartige Vorrichtungen und Verfahren im Bereich der medizinischen Diagnostik einsetzen, beispielsweise zur Codierung von Testelementen in Form von Testbändern oder Teststreifen, zum Nachweis mindestens eines Analyten in einer Körperflüssigkeit. Dementsprechend betrifft die Erfindung auch derartig codierte medizinische Einwegartikel.

### Stand der Technik

Insbesondere in der medizinischen Diagnostik sind zahlreiche Einwegartikel bekannt, welche schnell, zuverlässig und kostengünstig codiert werden müssen. So ermöglicht beispielsweise die Untersuchung von Blutproben oder anderen Proben von Körperflüssigkeit, beispielsweise interstitieller Flüssigkeit, in der klinischen Diagnostik das frühzeitige und zuverlässige Erkennen von pathologischen Zuständen sowie eine gezielte und fundierte Kontrolle von Körperzuständen. Die medizinische Diagnostik setzt in der Regel die Gewinnung einer Probe aus Blut oder interstitieller Flüssigkeit des zu untersuchenden Patienten voraus. Zu diesem Zweck wird üblicherweise die Haut, beispielsweise an der Fingerbeere oder dem Ohrläppchen, mit Hilfe einer sterilen, spitzen oder scharfen Lanzette perforiert, um so eine geringe Menge an Blut für die Analyse zu gewinnen.

Die eigenhändige Blutzuckerbestimmung ist heute eine weltweit verbreitete Methode in der Diabetes-Kontrolle. Blutzuckergeräte im Stand der Technik weisen in der Regel ein Analysegerät auf, welches mit mindestens einem Testelement zusammenwirkt. Die zu analysierende Probe wird auf ein Testfeld des Testelements aufgebracht und reagiert in dem Testfeld gegebenenfalls mit einem oder mehreren Reagenzien, welche in der Regel spezifisch für den nachzuweisenden Analyten ausgewählt sind. Diese Reaktion lässt sich nachweisen, beispielsweise auf optischem Wege und/oder auf elektrochemischem Wege.

Grundsätzlich lässt sich die unten beschriebene Erfindung beispielsweise auf alle Arten von Testelementen gemäß dem Stand der Technik anwenden. So kann das Testelement beispielsweise eines oder mehrere der folgenden Testelemente umfassen: einen Teststreifen, insbesondere einen Einzelteststreifen mit einer einzelnen oder mehreren Analysezonen; ein Testband; ein Testrad mit mehreren umfangsseitig angeordneten Analysezonen; ein Testrad mit mehreren auf seiner Oberfläche angeordneten Analysezonen, insbesondere Tortenstück-förmig angeordneten Analysezonen; ein faltbares Testelement mit mehreren Analysezonen (Leporello). Dabei können beispielsweise Testelemente eingesetzt werden, bei welchen die Probe unmittelbar auf die Analysezone aufgebracht wird, beispielsweise durch direktes Auftropfen, Auftupfen oder ähnliches. Dieses direkte Aufbringen kann beispielsweise in Form eines "Top Dosing" erfolgen, bei welchem die Analysezone beispielsweise auf einer ebenen Oberfläche des Testelements angeordnet ist und von oben mit der Probe beaufschlagt wird. Alternativ oder zusätzlich käme jedoch auch ein so genanntes "Front Dosing" in Betracht, bei welchem eine Stirnfläche des Testelements mit der Probe beaufschlagt wird. In letzterem Fall kann beispielsweise die Probe unmittelbar auf die Analysezonen aufgebracht werden, oder es kann ein Transport der Probe von der Applikationsstelle hin zu der Analysezone erfolgen, beispielsweise über Kapillarenkräfte. Weitere Ausführungsformen sind denkbar. Auch hinsichtlich der Art des Nachweises des Analyten besteht eine Vielzahl von Möglichkeiten. So kann beispielsweise ein elektrochemischer Nachweis erfolgen. Alternativ oder zusätzlich kann ein optischer Nachweis erfolgen. In letzterem Fall kann beispielsweise ein direkter optischer Nachweis durch Einstrahlung von Licht erfolgen. Alternativ oder zusätzlich kann das eingestrahlte Licht oder das von der Analysezone ausgehende Licht auch über einen oder mehrere Lichtleiter transportiert werden. Verschiedene andere Ausführungsformen sind denkbar.

Bei der Verwendung derartiger medizinischer bzw. diagnostischer Verbrauchsmaterialien, wie beispielsweise Testelementen und/oder Lanzetten, treten in der Praxis jedoch eine Reihe von technischen Problemen auf, welche in vielen Fällen durch aufwändige apparative Lösungen überwunden werden müssen. So besteht eine Schwierigkeit darin, dass verschiedcne Testelemente, welche in einem Analysesystem eingesetzt werden können, untereinander Unterschiede aufweisen können. So können sich beispielsweise Unterschiede hinsichtlich des Herstellers und/oder des Herstellungsverfahrens, hinsichtlich der verwendeten Nachweisreagenzien, hinsichtlich des nachzuweisenden Analyten, hinsichtlich des einzusetzenden Analyseverfahrens und/oder Analysesystems, hinsichtlich der Bedingungen, unter denen die Analyse durchgeführt werden soll, hinsichtlich der Parameter und/oder der Algorithmen für die Auswertung von Messungen, hinsichtlich der Chargennummern, hinsichtlich chargenspezifischer Besonderheiten, hinsichtlich des Produktionsverfahrens, hinsichtlich der Anzahl von Analysezonen auf einem Testelement oder ähnliches ergeben. Auch bei Lanzetten oder anderen Arten medizinischer Einwegartikel können sich derartige Artikel-spezifische Informationen ergeben, insbesondere Informationen hinsichtlich des Herstellers, der Art der Lanzette, der zu verwendenden Lanzettensysteme oder ähnliches. Derartige Informationen werden in der folgenden Anmeldung allgemein unter dem Begriff "Artikel-spezifische Informationen" erfasst, wobei derartige Artikel-spezifische Informationen allgemein sich auf Informationen zu den medizinischen Einwegartikeln beziehen, welche sich von Artikel zu Artikel oder sogar innerhalb eines Artikels (beispielsweise von Analysezone zu Analysezone bei Testelementen mit mehreren Analysezonen) unterscheiden können.

In vielen Fällen ist es daher erforderlich, einen medizinischen Einwegartikel oder eine Gruppe medizinischer Einwegartikel, beispielsweise in einem Magazin aufgenommene medizinische Einwegartikel, entsprechend zu codieren, um, sobald dies erforderlich ist, diese Artikel-spezifischen Informationen entsprechend bereitstellen zu können. Ein wichtiges Anwendungsbeispiel besteht in einem automatischen Einlesen Artikel-spezifischer Informationen durch ein Analysegerät, welches medizinische Einwegartikel, wie beispielsweise Teststreifen, Testbänder oder Lanzetten verwenden soll.

Da ein manuelles Eingeben und Auslesen derartiger Artikel-spezifischer Informationen in der Regel für den Patienten unzumutbar oder undurchführbar ist, sind aus dem Stand der Technik verschiedene Verfahren und Systeme bekannt, bei welchen Artikel-spezifische Informationen automatisch eingelesen werden können. So sind beispielsweise Systeme bekannt, bei welchen zunächst ein Kalibrier-Testelement in das Analysesystem eingegeben werden muss, wie dies beispielsweise in US 2007/0273928 A1 beschrieben wird. Aus US 5,281,395 ist ein System bekannt, bei welchem ein separater Auswertungs-Code auf den Testelementen vorgesehen ist, welcher mit einer separaten Ausleseeinheit ausgelesen wird. Neben derartigen Code-Systemen für Einzelteststreifen sind auch Codierungen für Testbänder bekannt, beispielsweise aus US 5,077,010. In dieser Schrift wird vorgeschlagen, zu Beginn eines Testbandes einen Codierungsbereich auf dem Testband vorzusehen, welcher mindestens eine Information umfasst. Dieser Codierungsbereich kann beispielsweise mit dem Detektor, welcher auch für die optische Messung verwendet wird, ausgelesen werden.

Üblicherweise werden zur Codierung, wie beispielsweise in der US 5,077,010 dargestellt, Streifen-Barcodes oder Barcodes in Form von zweidimensionalen Schwarz-Weiß-Testfeldem verwendet. Derartige ein- oder zweidimensionale Barcodes sind in verschiedenen Ausführungen und nach verschiedenen Normen bekannt. Die Erfassung der Barcodes kann beispielsweise in Form einer Schwarz-Weiß-Erkennung über verschiedene Grauwerte erfolgen, wie beispielsweise in DE 101 23 406 A1 beschrieben wird.

Die Problematik üblicher Barcodes besteht jedoch darin, dass diese in der Regel nicht nur eine einfache Seriennummer beinhalten müssen, sondern dass viele Artikel-spezifische Informationen eine umfangreichere Speichertiefe aufweisen. So müssen beispielsweise für Teststreifen oder Testbänder in der Regel umfangreiche Informationen bereitgestellt werden, um eine korrekte und zuverlässige Auswertung dieser Testelemente zu ermöglichen.

Es ist daher bekannt, zusätzlich zu einfachen Schwarz-Weiß-Informationen auch Halbtöne bzw. Grauwerte selbst als Informationsträger zu nutzen. So beschreibt beispielsweise WO 03/086759 A1 ein Codierungssystem, in welchem Daten in einem Bild verschlüsselt werden, indem Halbton-Einstellungen eingesetzt werden. Diese bekannten Verfahren sind jedoch vergleichsweise aufwändig und erfordern in vielen Fällen eine Ressourcenaufwändige Umsetzung. Ein derartiger Aufwand ist häufig im Bereich der medizinischen Diagnostik, in welchem insbesondere oft einfache und kostengünstige Handgeräte bereitgestellt werden müssen, nicht realisierbar.

### Aufgabe der Erfindung

Es ist daher eine Aufgabe der vorliegenden Erfindung, ein Verfahren und eine Vorrichtung anzugeben, welche zur Codierung bzw. Decodierung medizinischer Einwegartikel geeignet sind und welche einfach und kostengünstig zu realisieren sind, bei gleichzeitig ausreichend großer Menge an speicherbarer bzw. codierbarer Information.

### Offenbarung der Erfindung

Es werden daher ein Codierverfahren und ein entsprechendes Decodierverfahren sowie eine Codiervorrichtung und eine entsprechende Decodiervorrichtung vorgeschlagen, welchc diese Aufgabe zumindest weitgehend lösen und welche in den unabhängigen Ansprüchen dargestellt sind. Vorteilhafte Weiterbildungen sind in den abhängigen Ansprüchen aufgeführt. Dabei korrespondieren die jeweils beanspruchten Gegenstände miteinander, also beispielsweise das vorgeschlagene Codierverfahren mit dem vorgeschlagenen Decodierverfahren und die zugehörigen Vorrichtungen mit den jeweils zugehörigen Verfahren, so dass bezüglich möglicher Ausgestaltungen eines Gegenstandes jeweils auf die Beschreibung der zugehörigen Gegenstände verwiesen werden kann. Beispielsweise kann für die möglichen Ausgestaltungen der im Folgenden beschriebenen Codiervorrichtung auf mögliche Ausgestaltungen des im Folgenden beschriebenen Codierverfahrens verwiesen werden und umgekehrt.

Das vorgeschlagene Codierungsverfahren dient der Erzeugung mindestens einer Codierung auf einem Artikel, insbesondere einem medizinischen Einwegartikel, beispielsweise einem medizinischen Einwegartikel gemäß der obigen Beschreibung. Auch andere Artikel können jedoch naturgemäß mittels des vorgeschlagenen Codierungsverfahrens codiert werden.

Die Codierung umfasst mindestens eine Information in codierter Form. Diese mindestens eine Information kann beispielsweise mindestens eine Chargeninformation über den Artikel, insbesondere den medizinischen Einwegartikel, umfassen. Auch andere Arten von Informationen können jedoch in der mindestens einen Information enthalten sein.

Das vorgeschlagene Codierungsverfahren umfasst die im Folgenden beschriebenen Schritte a) bis c), welche vorzugsweise, jedoch nicht notwendigerweise, in der dargestellten Reihenfolge durchgeführt werden können. Weiterhin können auch zusätzliche, nicht genannte Verfahrensschritte durchgeführt werden.
a) Die mindestens eine Information wird in einen Code umgewandelt, wobei der Code eine Mehrzahl von Paaren aus einem Grauwert und einem Füllgrad umfasst.

Diese Umwandlung kann beispielsweise mittels eines entsprechenden Encoders erfolgen. Diese Umwandlung erfolgt beispielsweise ähnlich, wie eine übliche Information in einen binären Code oder einen Code nach dem Dezimalsystem umgewandelt wird. So kann beispielsweise eine Zuordnungsvorschrift genutzt werden, mittels derer diese Umwandlung stattfindet. Beispiele einer derartigen Umwandlung oder Rückumwandlung werden unten näher beschrieben.
b) Der derart erzeugte Code wird in eine optische Information, insbesondere eine zweidimensionale optische Information, umgewandelt. Diese optische Information weist mindestens ein bis zum einem zugehörigen Füllgrad mit mindestens einem Grauwert angefülltes Feld entsprechend der Mehrzahl von Paaren aus Grauwert und Füllgrad auf.

Beinhaltet beispielsweise ein erstes Paar des Codes, dass ein Grauwert der Stufe 2 bis zu einem Füllgrad von 75 % vorhanden sein soll, so wird das mindestens eine Feld entsprechend mit diesem Grauwert angefüllt. Entsprechend wird mit allen Grauwerten bzw. allen Paaren aus Grauwert und Füllgrad verfahren.

Unter einem Feld ist dementsprechend eine mit jeweils einem einheitlichen Grauwert gefüllte Fläche zu verstehen. Ein Feld kann dabei grundsätzlich eine beliebige geometrische Form aufweisen, beispielsweise die Form eines Rechtecks, eines Quadrats, eines Polygons, eine runde Form. Ein Feld kann dabei auch aus mehreren Teil-Feldern zusammengesetzt sein, die zusammenhängend oder auch nicht-zusammenhängend ausgestaltet sein können. Verschiedene Felder müssen dabei nicht notwendigerweise eine gleiche Größe aufweisen, sondern es können Felder unterschiedlicher Größe vorhanden sein. Ein Feld kann, muss jedoch nicht notwendigerweise, optional zusätzlich mit einer erkennbaren Grenze versehen sein, beispielsweise mindestens einer Umrandung.
c) Die optische Information wird auf den Artikel aufgebracht.

Für dieses Aufbringen können beispielsweise übliche Techniken verwendet werden, insbesondere Drucktechniken, einschließlich beispielsweise Siebdrucktechniken, Offsetdrucktechniken, Tintenstrahldrucktechniken, Laserdrucktechniken oder ähnliche Drucktechniken. Auch Schreibtechniken oder andere Techniken, wie sie üblicherweise zum Aufbringen optischer Informationen auf Artikel genutzt werden, können eingesetzt werden. Weiterhin können für dieses Aufbringen auch Techniken eingesetzt werden, bei welchen der Artikel selbst entsprechend modifiziert wird, um die optische Information aufzuweisen, beispielsweise indem entsprechende Vertiefungen in einen Artikel eingebracht werden, welche die optische Information wiedergeben oder ähnliches.

Entsprechend dem vorgeschlagenen Codierungsverfahren wird weiterhin eine Codiervorrichtung zum Erzeugen der mindestens einen Codierung auf einem Artikel vorgeschlagen, welche insbesondere unter Verwendung des Codierverfahrens in einer der oben beschriebenen oder im Folgenden weiter beschriebenen Ausgestaltungen eingesetzt werden kann. Diese Codiervorrichtung umfasst mindestens eine Codeerzeugungsvorrichtung, welche eingerichtet ist, um die mindestens eine Information in einen Code umzuwandeln, der eine Mehrzahl von Paaren aus einem Grauwert und einem Füllgrad umfasst. Weiterhin umfasst die Codiervorrichtung mindestens eine Umwandlungsvorrichtung, wobei die Umwandlungsvorrichtung eingerichtet ist, um den Code in eine optische Information umzuwandeln. Schließlich umfasst die Codiervorrichtung mindestens eine Aufbringvorrichtung, welche eingerichtet ist, um die optische Information auf den Artikel aufzubringen.

Die Codeerzeugungsvorrichtung und/oder die Umwandlungsvorrichtung können beispielsweise mindestens eine Datenverarbeitungseinrichtung umfassen. Diese Datenverarbeitungseinrichtung kann beispielsweise mindestens einen Personal Computer und/oder mindestens einen Mikrocomputer umfassen und kann entsprechend programmtechnisch eingerichtet sein, um die Codeerzeugung und/oder die Umwandlung des Codes in die optische Information vorzunehmen. Wie oben beschrieben, kann die Codeerzeugungsvorrichtung und/oder die Umwandlungsvorrichtung weiterhin mindestens einen Encoder umfassen, welcher auch ganz oder teilweise bauteilidentisch mit der Datenverarbeitungsvorrichtung sein kann. In dem Encoder und/oder der Datenverarbeitungseinrichtung können entsprechende Vorschriften zur Erzeugung der Grauwertpaare hinterlegt oder in sonstiger Form gespeichert sein.

Das Codierungsverfahren und die Codiervorrichtung lassen sich auf verschiedene Weisen vorteilhaft weiterbilden.

Die Form der Codierung und/oder der zweidimensionalen optischen Informationen spielt grundsätzlich eine untergeordnete Rolle. Beispielsweise kann die Codierung und/oder die zweidimensionale optische Information eine rechteckige geometrische Gestalt aufweisen, da in vielen Fällen auch rechteckige Bildsensoren verwendet werden. Grundsätzlich sind jedoch auch andere geometrische Formen möglich, beispielsweise Linien, Kreise, Ovale, dreieckige oder anders gestaltete polygonale Formen oder ähnliches. Alternativ oder zusätzlich können auch beispielsweise zufällige und/oder unregelmäßige Formen vorgesehen sein. Das mindestens eine Feld der optischen Information kann beispielsweise eine Mehrzahl von Teil-Feldern umfassen. Für jeden Grauwert kann ein eigenes Feld vorgesehen sein. So kann beispielsweise jedes Feld einem bestimmten Grauwert zugeordnet sein und mit diesem bis zu dem zugehörigen Füllgrad ausgefüllt sein. Umgekehrt kann jedoch auch eine Zuordnung zum Füllgrad erfolgen, so dass beispielsweise für jeden Füllgrad ein bestimmtes Feld vorgesehen ist, was dann mit dem zugehörigen Grauwert ausgefüllt wird. Neben diesen Beispielen sind noch eine Vielzahl von anderen Arten von Feldern oder optischen Informationen möglich, beispielsweise beliebige Muster. Werden Felder verwendet, so können diese, wie oben dargestellt, beispielsweise wiederum grundsätzlich eine beliebige Form aufweisen, beispielsweise eine rechteckige, lineare, runde, polygonale oder sonstige Form. Mehrere Felder können beispielsweise in Matrixform angeordnet sein und auf diese Weise die optische Information bilden.

Unter einer Graustufencodierung oder Grauwertcodierung ist dabei allgemein eine Codierung zu verstehen, welche als Informationsträger auch Grauwerte oder Graustufen (diese Begriffe werden in der Regel und im Folgenden synonym verwendet), d.h. verschiedene Helligkeitsstufen einer oder mehrerer Farben, nutzt. Grundsätzlich ist der Begriff der Graustufe bzw. des Grauwerts dabei jedoch weit zu fassen und umfasst beispielsweise auch unterschiedliche Helligkeitsstufen bei Detektoren für Farberkennung.

Je nach Auflösung können dabei Graustufen zwischen Schwarz (wobei bei einer bunten Farbe unter "Schwarz" entsprechend die dunkelste Stufe zu verstehen ist) und Weiß (wobei bei einer bunten Farbe unter "Weiß" entsprechend die hellste Stufe zu verstehen ist) erfolgen. Vorzugsweise kann die Codierung in diskreten Schritten mit mindestens einer, vorzugsweise mehreren, Zwischenstufen zwischen diesen Grenzwerten Schwarz und Weiß erfolgen. Beispielsweise kann eine Graustufencodierung in Graustufenschritten mit konstantem, vorgegebenem Abstand von Schwarz bis Weiß eingesetzt werden. So kann in dem oben dargestellten ersten Verfahrensschritt a) eine diskrete Anzahl möglicher Grauwerte vorgegeben sein, welche beispielsweise durchnummeriert sein können, beispielsweise Grauwertstufe 1, Grauwertstufe 2, usw. Dies erleichtert die Auswertung, da gezielt nach diesen Grauwerten gesucht werden kann. Beispielsweise kann bei der Auswertung der optischen Information ein Bereich vorgegeben werden, innerhalb dessen die Grauwerte einer bestimmten Grauwertstufe zugeordnet werden. Dieses Schwellwertverfahren lässt sich durch eine entsprechende Grauwerterkennung leicht automatisieren.

Analog kann auch eine diskrete Anzahl von möglichen Füllgraden vorgesehen sein. Auch dies erleichtert die Auswertung. So können beispielsweise Füllgrade von 0 %, 25 %, 50 %, 75 % und 100 % vorgegeben sein als diskrete mögliche Füllgrade. Auch eine andere Aufteilung ist jedoch grundsätzlich möglich.

Das vorgeschlagene Codierungsverfahren kann insbesondere mittels eines entsprechenden Computerprogramms umgesetzt werden. So können beispielsweise die oben dargestellten Verfahrensschritte a) und b) mittels eines Computerprogramms mit Programmcode umgesetzt werden, wenn das Programm auf einem Computer, wobei sinngemäß dieser auch ein Computernetzwerk umfassen kann, ausgeführt wird. Neben dem Computerprogramm wird dementsprechend auch ein Computerprogramm vorgeschlagen, welches auf einem maschinenlesbaren Träger gespeichert ist.

Neben den oben beschriebenen Codierungsverfahren und der Codiervorrichtung werden entsprechend ein Decodierungsverfahren und eine Decodiervorrichtung vorgeschlagen. Dieses Decodierungsverfahren dient der Decodierung mindestens einer codierten Information auf einem Artikel, insbesondere auf einem medizinischen Einwegartikel, insbesondere mittels eines Codierverfahrens nach einer oder mehreren der oben beschriebenen Ausführungsformen. Dementsprechend kann für zahlreiche Details des Decodierungsverfahrens auf die obige Beschreibung verwiesen werden.

Das vorgeschlagene Decodierungsverfahren umfasst die folgenden Schritte:
i) Mindestens eine auf dem Artikel aufgebrachte optische Information, insbesondere eine zweidimensionale optische Information, wird erfasst, wobei die optische Information mindestens ein bis zu einem zugehörigen Füllgrad mit mindestens einem Grauwert angefülltes Feld umfasst.
ii) Die optische Information wird mittels einer Histogrammanalyse in einen Code umgewandelt, wobei der Code eine Mehrzahl von Paaren aus einem Grauwert und einem Füllgrad, entsprechend der Histogrammanalyse, umfasst.
iii) Der Code wird in die Information umgewandelt.

Das beschriebene Decodierungsverfahren kann somit insbesondere eine Umkehrung des oben beschriebenen Codierungsverfahrens sein. Die Umwandlung des Codes in die Information bzw. die Umwandlung der optischen Information in die Mehrzahl von Paaren aus Grauwert und Füllgrad kann insbesondere wiederum mittels eines Encoders oder Decoders erfolgen und/oder mittels einer entsprechend eingerichteten Datenverarbeitungseinrichtung, beispielsweise der oben beschriebenen Datenverarbeitungseinrichtung. Dementsprechend kann diese Decodierung gemäß den Schritten ii) und iii) ganz oder teilweise wiederum programmtechnisch ausgestaltet werden. Demzufolge wird weiterhin ein Computerprogramm mit Programmcode zur Durchführung der Verfahrensschritte ii) und iii) des Decodierungsverfahrens gemäß der obigen Beschreibung, wenn das Programm auf einem Computer ausgeführt wird, vorgeschlagen. Dieses Computerprogramm kann auch auf einem maschinenlesbaren Träger gespeichert sein.

Unter einer "Histogrammanalyse" ist dabei eine beliebige Analyse zu verstehen, welche eine Häufigkeitsverteilung auswertet. Diese Auswertung kann beispielsweise in grafischer Form erfolgen, was jedoch nicht notwendigerweise der Fall sein muss. Allgemein ist somit unter einer Histogrammanalyse im Sinne der vorliegenden Erfindung eine Analyse zu verstehen, welche Grauwerten entsprechende Füllgrade zuordnet oder umgekehrt, je nach Auftreten in der ausgewerteten optischen Information. Dabei ist die Art der Analyse grundsätzlich von untergeordneter Relevanz, solange das Ergebnis eine Zuordnung von Grauwerten zu Füllgraden oder umgekehrt darstellt. So kann beispielsweise unmittelbar eine Grauwert-Füllgrad-Auswertung vorgenommen werden, oder es kann auch zunächst eine ortsaufgelöste Bildinformation gewonnen werden, welche dann weiter in Grauwerte und Füllgrade umgewandelt wird.

Entsprechend dem vorgeschlagenen Decodierungsverfahren wird weiterhin eine Decodiervorrichtung vorgeschlagen, welche beispielsweise zur Durchführung des Decodierverfahrens eingerichtet sein kann. Die Decodiervorrichtung umfasst mindestens eine Erfassungsvorrichtung zum Erfassen der mindestens einen auf dem Artikel aufgebrachten optischen Information. Weiterhin umfasst die Decodierungsvorrichtung mindestens eine Auswertungsvorrichtung, welche eingerichtet ist, um die optische Information mittels einer Histogrammanalyse in einen Code umzuwandeln, wobei der Code eine Mehrzahl von Paaren aus einem Grauwert und einem Füllgrad, entsprechend der Histogrammanalyse, umfasst. Weiterhin umfasst die Decodiervorrichtung mindestens eine Entschlüsselungsvorrichtung zum Umwandeln des Codes in die Information. Für weitere Details und mögliche Ausgestaltungen kann wiederum auf die obige Beschreibung des Decodierungsverfahrens sowie auf die Beschreibungen der Codiervorrichtung und des Codierungsverfahrens verwiesen werden.

Die Decodiervorrichtung kann insbesondere mindestens ein Analysesystem zum Nachweis mindestens eines Analyten in einer Probe, insbesondere einer Körperflüssigkeit, umfassen. Das Analysesystem kann insbesondere eingerichtet sein, um für diesen Nachweis mindestens ein Testelement und/oder mindestens eine Lanzette zu verwenden.

Wird ein Testelement verwendet, so kann dieses Testelement insbesondere mindestens ein Testfeld umfassen, welches beispielsweise eine elektrochemische und/oder eine optische Messung des Analyten, d.h. einen quantitativen und/oder qualitativen Nachweis des Analyten, ermöglicht. Derartige Testelemente sind aus dem Stand der Technik in zahlreichen Ausführungsformen bekannt.

Wird ein optisches Nachweisverfahren verwendet, wenn also das Testelement ein optisches Testfeld umfasst, so ist es besonders bevorzugt, wenn das Analysesystem zur Auswertung der optischen Information, also als Erfassungsvorrichtung oder als Teil derselben, denselben optischen Detektor verwendet, welcher auch zum Auswerten des optischen Testfeldes eingesetzt wird. Auf diese Weise lassen sich zusätzliche Komponenten für die Erfassungsvorrichtung einsparen.

Beispielsweise kann dieser mindestens eine optische Detektor einen ortsaufgelösten optischen Detektor umfassen. Beispielsweise kann es sich dabei um einen CMOS- und/oder CCD-Chip handeln.

Diese Ausführungsform der Erfindung ist besonders deswegen von Vorteil, weil viele optische Messverfahren ebenfalls auf eine Grauwertanalyse der optischen Testfelder zurückgreifen. So wird beispielsweise in EP 1 843 148 A1 eine Analyse optischer Daten mit Hilfe von Histogrammen beschrieben. Auf diese Weise können für die Decodierung und den optischen Nachweis des Analyten unter Verwendung desselben Detektors Synergieeffekte genutzt werden, da ganz oder teilweise beispielsweise dieselben Hardwarekomponenten und/oder auch zumindest teilweise dieselben Softwarekomponenten eingesetzt werden können.

Die Decodiervorrichtung kann allgemein auch den mindestens einen Artikel, insbesondere den mindestens einen medizinischen Einwegartikel, auf welchem die optische Information aufgebracht ist, umfassen. Dies wurde oben am Beispiel des Analysesystems beschrieben, welches als medizinischen Einwegartikel beispielsweise ein Testelement in Form eines Teststreifens und/oder eines Testbandes, und/oder eine Lanzette umfassen kann, welche entsprechend mit der optischen Information versehen sind. Beispielsweise kann die optische Information in codierter Form Chargeninformationen über den medizinischen Einwegartikel umfassen.

Wird zur Erfassung der optischen Information ein Bildsensor verwendet, welcher zweidimensionale Bildinformationen auflösen kann, insbesondere ein CCD-Chip und/oder ein CMOS-Chip, so kann die Auswertungsvorrichtung der Decodiervorrichtung beispielsweise ganz oder teilweise in einer entsprechenden Datenverarbeitungsvorrichtung integriert sein, wie oben beschrieben wurde. Alternativ oder zusätzlich kann die Auswertungsvorrichtung jedoch auch ganz oder teilweise in dem Bildsensor selbst integriert sein, beispielsweise in dem CCD-Chip und/oder dem CMOS-Chip. Somit kann beispielsweise bereits eine teilweise Auswertung der optischen Information zur Decodierung in dem Bildsensor erfolgen. Auch eine entsprechende Histogrammanalyse kann beispielsweise in dem Bildsensor integriert sein.

Neben der Decodiervorrichtung wird weiterhin ein medizinischer Einwegartikel beschrieben, welcher mindestens eine Codierung umfasst, die mittels eines Codierungsverfahrens nach einer oder mehreren der oben beschriebenen Ausführungsformen erzeugt wurde. Wie oben dargestellt, kann der medizinische Einwegartikel beispielsweise ein Testelement, insbesondere ein Testband und/oder einen Teststreifen, zum Nachweis mindestens eines Analyten, insbesondere eines Metaboliten, in einer Probe, insbesondere einer Körperflüssigkeit, umfassen. Alternativ oder zusätzlich können auch andere Einwegartikel umfasst sein, beispielsweise eine Lanzette zur Erzeugung einer Probe einer Körperflüssigkeit oder ähnliches.

Die Codierung in Form der mindestens einen optischen Information kann in diesem Fall insbesondere, wie oben dargestellt, mindestens eine Artikel-spezifische Information über den medizinischen Einwegartikel gemäß der obigen Beschreibung umfassen.

Die Codierung bzw. die optische Information kann grundsätzlich auf einer beliebigen Stelle des medizinischen Einwegartikels aufgebracht sein. So kann die Codierung bzw. die optische Information beispielsweise auf dem medizinischen Einwegartikel selbst aufgebracht sein. Alternativ oder zusätzlich kann die Codierung beziehungsweise die optische Information auch auf einer Verpackung des medizinischen Einwegartikels aufgebracht sein, so dass in diesem Fall die Verpackung begrifflich an die Stelle des medizinischen Einwegartikels tritt und im Rahmen der vorliegenden Erfindung von diesem Begriff erfasst sein soll. Eine Verpackung kann einen oder mehrere medizinische Einwegartikel umfassen. Wird ein Teststreifen und/oder ein Testband eingesetzt, welches zur Analyse mindestens einer Körperflüssigkeit geeignet ist und über mindestens ein entsprechendes Testfeld verfügt, so ist es besonders bevorzugt, die Codierung in Form der optischen Information auf einem Träger aufzubringen, auf welchem auch das mindestens eine Testfeld aufgebracht ist. Beispielsweise kann dieser Träger ein Träger mit einem Papiermaterial, einem Kunststoffmaterial, einem Laminatmaterial oder einem Keramikmaterial sein.

Werden mehrere Testfelder auf dem Testelement angeordnet, so können auch für diese mehreren Testfelder und/oder eine Gruppe der Testfelder mehrere Codierungen vorgesehen sein. Beispielsweise kann ein Testband derart ausgestaltet sein, dass dieses alternierend Testfelder und Codierungen in Form optischer Informationen umfasst. Auf diese Weise können beispielsweise auch in codierter Weise Informationen über die Anzahl der noch verbleibenden Testfelder oder ähnliches mit umfasst sein.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigt:
- Figur 1: eine perspektivische Darstellung eines Ausführungsbeispiels eines herkömmlichen Analysesystems als Beispiel einer Decodiervorrichtung;
- Figur 2: einen schematischen Aufbau des Analysesystems gemäß Figur 1;
- Figur 3: einen schematischen Aufbau eines erfindungsgemäßen Testbandes für den Einsatz in einem Analysesystem gemäß den Figuren 1 und 2;
- Figur 4: ein Ausführungsbeispiel eines Analysesystems mit einem Teststreifen;
- Figur 5: ein Ausführungsbeispiel eines Teststreifens für den Einsatz in einem Analysesystem gemäß Figur 4;
- Figur 6: ein Ausführungsbeispiel einer erfindungsgemäßen Codierung;
- Figur 7: ein Ausführungsbeispiel einer Histogrammanalyse der Codierung gemäß Figur 6;
- Figur 8: ein Ausführungsbeispiel einer Graustufencodierung der Zahl 262144;
- Figur 9: die Zahl 262144 in Darstellung mit einem handelsüblichen Streifen-Barcode;
- Figur 10: ein schematisches Ablaufdiagramm eines Ausführungsbeispiels eines erfindungsgemäßen Codierungsverfahrens; und
- Figur 11: ein schematischer Ablaufplan eines Ausführungsbeispiels eines erfindungsgemäßen Decodierungsverfahrens.

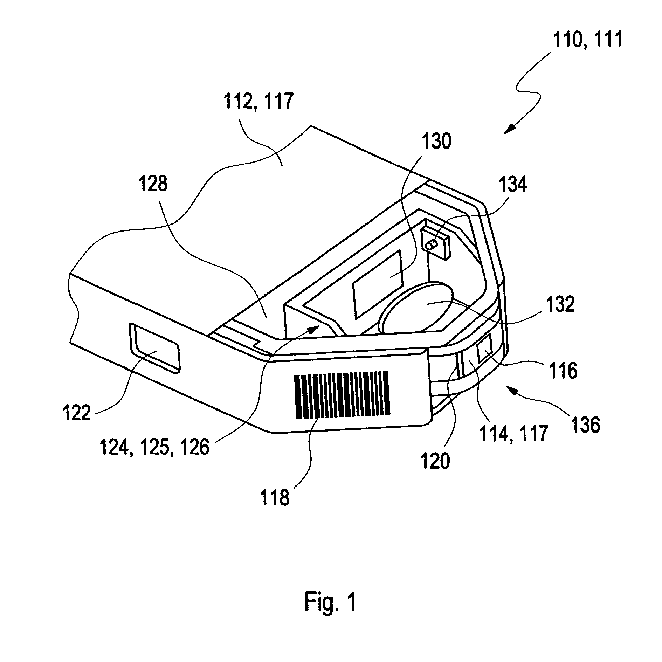

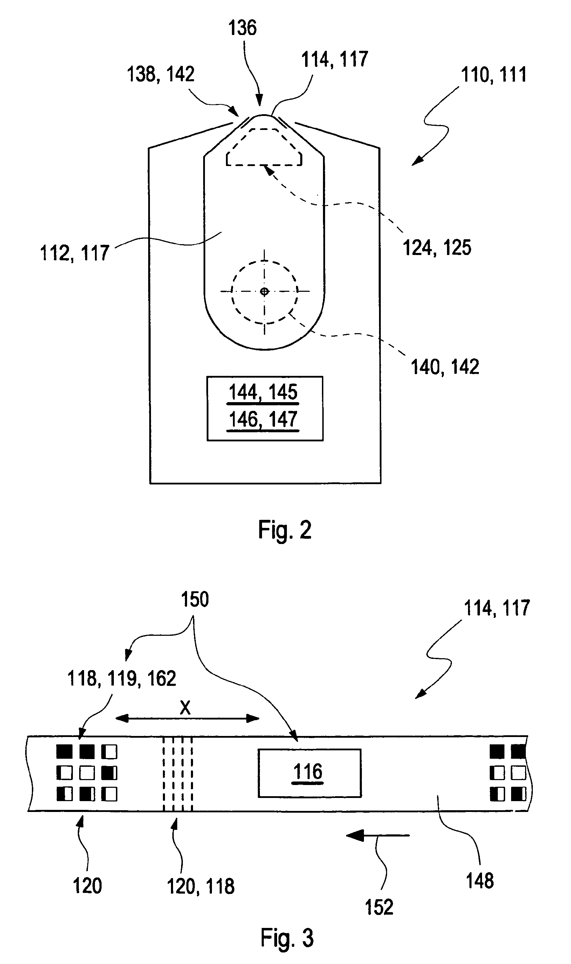

In Figur 1 ist in perspektivischer Darstellung ein Ausschnitt eines handelsüblichen Analysesystems 110 gezeigt, welches im Rahmen der vorliegenden Erfindung, beispielsweise durch entsprechende programmtechnische Einrichtung, als Decodiervorrichtung 111 eingesetzt wird. In Figur 2 ist, in vereinfachter Darstellung, ein schematischer Aufbauplan dieses Analysesystems 110 gezeigt. Auf beide Figuren wird im Folgenden Bezug genommen.

Das Analysesystem 110 umfasst in dem dargestellten Ausführungsbeispiel eine Bandkassette 112, welche beispielsweise auswechselbar in einem (nicht dargestellten) Gehäuse des Analysesystems 110 aufgenommen sein kann. In dieser Bandkassette 112 ist ein Testband 114 geführt, welches lediglich an der Spitze der Bandkassette 112 in einer Messposition 136 freiliegt und welches eine Mehrzahl von in Bandrichtung beabstandeten Testfeldern oder, was in der Regel synonym gebraucht wird, Analysezonen 116 für den optischen Nachweis von Glucose in Blut aufweist. Die Bandkassette 112 und das Testband 114 stellen beide Ausführungsbeispiele medizinischer Einwegartikel 117 dar, welche in der Regel für einen einmaligen Gebrauch oder für eine lediglich wenige Benutzungen umfassende Verwendung konzipiert sind. Derartige medizinische Einwegartikel 117 können als Massenware beispielsweise in der hier beschriebenen medizinischen Diagnostik oder in anderen Bereichen der Medizintechnik eingesetzt werden. Die vorliegende Erfindung betrifft im Wesentlichen die Codierung derartiger medizinischer Einwegartikel, welche im Folgenden am Beispiel des Testbands 114 beschrieben wird.

Außen auf der Bandkassette 112 ist eine Codierung 118 aufgebracht, welche in dem dargestellten Beispiel die Form eines Barcodes aufweist. Auch an dieser Stelle kann jedoch grundsätzlich eine erfindungsgemäße Codierung eingesetzt werden. Diese Codierung 118 kann beispielsweise Artikel-spezifische Informationen über das Testband 114 bzw. die Analysezonen 116 und die in diesen Analysezonen 116 enthaltene Testchemie umfassen.

Weiterhin kann das Testband 114 Positionierungsmarker 120 umfassen, welche beispielsweise alternierend zu den Analysezonen 116 auf das Testband 114 in Form von quer zum Testband 114 verlaufenden Balken aufgedruckt sein können. Diese Positionierungsmarker 120 können beispielsweise durch ein Positionierungsfenster 122 in der Bandkassette 112 erfasst werden, so dass ein Spulen des Testbands 114 durch das Analysesystem 110 entsprechend gesteuert werden kann. Alternativ oder zusätzlich können jedoch auch, wie unten näher beschrieben wird, Codierungen 118 auf dem Testband 114 selbst auch als Positionierungsmarker 120 eingesetzt werden.

Weiterhin umfasst das Analysesystem 110 in dem dargestellten Ausführungsbeispiel einen Detektor 124 in Form eines Optikmoduls 126, welches beim Einlegen der Bandkassette 112 in das Analysesystem 110 in eine Aussparung 128 der Bandkassette 112 eingreift. Dieser Detektor 124 umfasst in dem dargestellten Ausführungsbeispiel einen Bildsensor 130 zur ortsaufgelösten Aufnahme von Bildinformationen, beispielsweise einen CCD- oder CMOS-Bildsensorchip. Weiterhin umfasst der Detektor 124 eine ortsauflösende Optik 132, beispielsweise in Form einer oder mehrerer Linsen. Weiterhin umfasst der Detektor 124 in dem dargestellten Ausführungsbeispiel eine Lichtquelle 134, welche gegebenenfalls noch mit einer entsprechenden Beleuchtungsoptik versehen sein kann und welche eingerichtet ist, um die Analysezone 116, welche sich gerade in der Messposition 136 im Blickfeld des Detektors 124 befindet, zu beleuchten.

Bei dem in Figur 1 dargestellten, bekannten Analysesystem 110 kann für die Positionserkennung des Testbands 114, für die Erkennung der Codierung 118 und für die Bestimmung der Glucosekonzentration jeweils ein separater Detektor bzw. ein separates Messsystem eingesetzt werden. Die Aufspaltung dieser messtechnischen Aufgaben führt zu erhöhten Gerätekosten und erhöht den Bauraum des Analysesystems 110. Dementsprechend ist bei der vereinfachten Darstellung des Analysesystems 110 gemäß Figur 2 eine Option ausgeführt, in der die drei genannten messtechnischen Aufgaben von ein und demselben Detektor 124 ausgeführt werden. Auch lediglich zwei der genannten messtechnischen Aufgaben können beispielsweise zusammengefasst werden. Somit kann auf zusätzliche Detektoren zur Erkennung der Codierung 118 sowie auf einen zusätzlichen, in Figur 1 nicht dargestellten und mit dem Positionierungsfenster 122 zusammenwirkenden Positionierungssensor verzichtet werden, indem der Detektor 124 die Aufgabe der Positionierung mit übernimmt.

Die Darstellung des Analysesystems 110 gemäß Figur 2 ist gegenüber Figur 1 stark vereinfacht. So ist beispielsweise das Testband 114 in dieser Figur lediglich angedeutet. Im Bereich der Messposition 136 stellt die Bandkassette 112 eine Führung 138 für das Testband 114 bereit, innerhalb derer das Testband 114, angetrieben durch eine in Figur 2 lediglich angedeutete Antriebsvorrichtung, geführt und damit relativ zur Messposition 136 des Detektors 124 (in Figur 2 lediglich angedeutet) positioniert werden kann. Die Führung 138 und die Antriebsvorrichtung 140 können somit Bestandteile einer Transfereinrichtung 142 zur Positionierung des Testbands 114 darstellen.

Weiterhin kann das Analysesystem 110 eine Auswerteeinheit 144, welche die Messung der Blutglukosekonzentration mittels des Testbandes 114 und des Detektors 124 auswerten kann, umfassen, um somit eine quantitative und/oder qualitative Analyse der Blutprobe zu ermöglichen. Die Auswerteeinheit 144 ist in dem in Figur 2 dargestellten Ausführungsbeispiel optional zumindest teilweise bauteilidentisch mit einer Steuerung 146 gezeigt, welche beispielsweise die Bandpositionierung mittels der Transfereinrichtung 142 steuern kann. Auch eine getrennte Ausgestaltung oder lediglich eine teilweise bauteilidentische Ausgestaltung ist jedoch grundsätzlich möglich. In der Verwendung des Analysesystems 110 als Decodiervorrichtung 111 wird die Auswerteeinheit 144 gleichzeitig auch als Auswertungsvorrichtung 145 zur Auswertung einer optischen Information sowie als Entschlüsselungsvorrichtung 147 zum Umwandeln des Codes genutzt, wie unten näher beschrieben wird. Auch diese Auswertungsvorrichtung 145 und die Entschlüsselungsvorrichtung 147 können jedoch auch ganz oder teilweise als separate Komponenten ausgestaltet sein. Die Einheiten 144, 145, 146 und 147 können dabei eine oder mehrere elektronische Komponenten umfassen, beispielsweise einen oder mehrere Mikroprozessoren und/oder andere Arten elektronischer Komponenten. Zudem können auch eine oder mehrere Ein- und Ausgabeeinheiten vorgesehen sein, beispielsweise Schnittstellen, Eingabetasten, Displays, optische und/oder akustische Anzeigen oder ähnliche Vorrichtungen. Weiterhin können eine oder mehrere der Einheiten 144, 145, 146 und 147 auch ganz oder teilweise mit anderen Komponenten des Analysesystems 110 zusammengefasst werden. So kann beispielsweise die Auswertungsvorrichtung 145 und/oder die Entschlüsselungsvorrichtung 147 auch ganz oder teilweise beispielsweise bereits in dem Bildsensor 130 integriert sein, beispielsweise in einem CMOS- und/oder CCD-Chip dieses Bildsensors 130.

In dem in Figur 2 dargestellten Ausführungsbeispiel wird vorzugsweise der Detektor 124, wie oben dargestellt, multifunktional genutzt. Zu diesem Zweck wird auf dem Testband 114 eine Codierung 118 angebracht. Alternativ oder zusätzlich kann jedoch auch auf dem medizinischen Einwegartikel 117 in Form der Bandkassette 112 eine (gegebenenfalls weitere) Codierung 118 angeordnet sein, oder an anderen Stellen, beispielsweise auf einer Verpackung der Bandkassette 112. Verschiedene Ausgestaltungen sind denkbar.

Ein Ausführungsbeispiel eines im Rahmen des erfindungsgemäßen Analysesystems 110 bzw. der Decodiervorrichtung 111 einsetzbaren Testbands 114 ist in Figur 3 dargestellt. Dabei ist lediglich ein Ausschnitt dieses Testbands 114 gezeigt, welches auf einem Träger 148, beispielsweise einem transparenten Kunststoffband, alternierend Analysezonen 116 mit einer Testchemie für den Nachweis des Analyten und Codierungen 118 in Form entsprechender optischer Informationen 119 umfasst. Dabei ist jeweils eine Codierung 118 einer Analysezone 116 zugeordnet, so dass die jeweils eine Analysezone 116 und die zugeordnete Codierung 118 mit der optischen Information 119 ein Codierungs-Analysezonen-Paar 150 bilden. Auch andere Zuordnungen sind jedoch grundsätzlich möglich, so dass beispielsweise eine Codierung 118 einer Mehrzahl von Analysezonen 116 zugeordnet sein kann, oder eine Analysezone 116 einer Mehrzahl von Codierungen 118. In einer Spulrichtung des Bandes, welche in Figur 3 symbolisch mit der Bezugsziffer 152 bezeichnet ist, kann die Codierung 118 beispielsweise der Analysezone 116 vorgelagert sein, beispielsweise um einen bekannten Abstand X, so dass die Codierung 118 eines Codierungs-Analysezonen-Paars 150 in Spulrichtung 152 zuerst die Messposition 136 passiert, gefolgt von der zugehörigen Analysezone 116. Auch andere Ausgestaltungen sind jedoch grundsätzlich möglich.

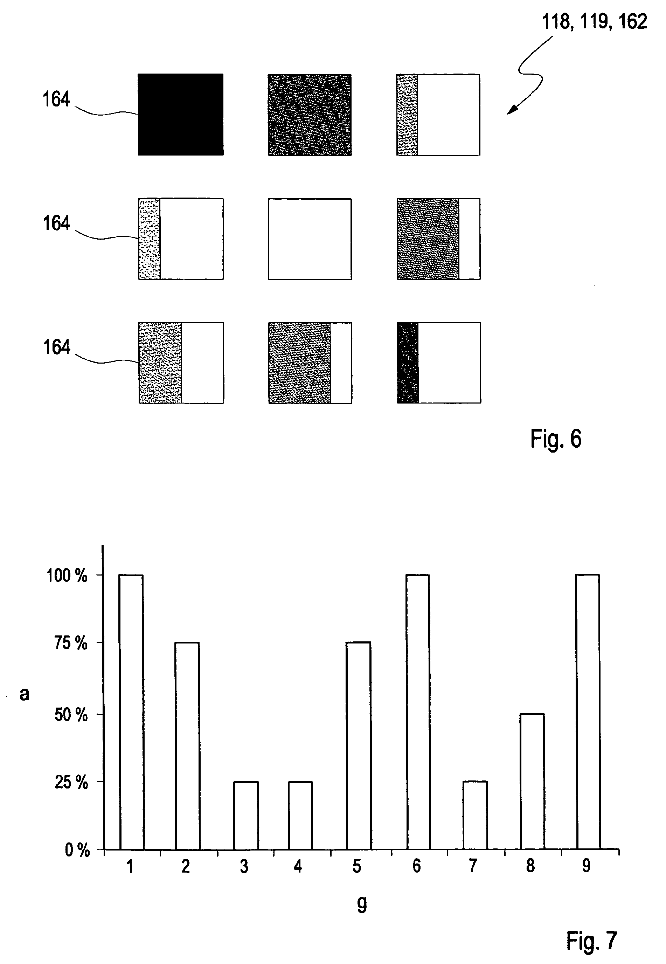

Die Codierung 118 ist in Figur 3 lediglich angedeutet in Form einer Codierung mit optischen Informationen 119 in Form mehrerer einzelner zweidimensionaler Felder, deren Anordnung unten in Figur 6 beispielhaft näher erläutert wird. Grundsätzlich ist jedoch auch eine andere Anordnung der Codierung, beispielsweise eine eindimensionale Codierung, beispielsweise eine Codierung, in welcher die Felder in Spulrichtung 152 hintereinander angeordnet sind, grundsätzlich möglich.

Bei dem vorgeschlagenen Analysesystem 110 wird der Detektor 124 multifunktional eingesetzt. So wird dieser zunächst eingesetzt, um die Verfärbung der Analysezone 116 zu messen. Weiterhin kann dieser Detektor 124 optional auch die Bandposition erkennen, indem beispielsweise die Codierung 118 selbst, die Positionierungsmarker 120 oder die Analysezonen 116 mittels des Detektors 124 erkannt und für eine Positionierung genutzt werden. Weiterhin kann der Detektor 124 im Rahmen der vorliegenden Erfindung und im Rahmen einer vorgeschlagenen Decodiervorrichtung 111 auch als Erfassungsvorrichtung 125 zum Erfassen der optischen Information 119 der Codierung 118 eingesetzt werden, insbesondere wenn alle hierfür notwendigen Informationen gleichzeitig oder nacheinander in einem Messfenster dieses Detektors 124 erkennbar sind. Insbesondere ist es auf diese Weise denkbar, alle erforderlichen Artikel-spezifischen Informationen in Form der optischen Information 119 der optisch wahrnehmbaren Codierung 118 auf das Testband 114 aufzubringen, beispielsweise durch Drucken, Etikettieren oder ähnliche Aufbringverfahren. Somit lassen sich also, individuell für jede Analysezone 116 bzw. für jede Gruppe von Analysezonen 116, welche gleichzeitig oder nacheinander in der Messposition 136 durch den Detektor 124 erfassbar ist, Artikel-spezifische Informationen in der zugehörigen Codierung 118 unterbringen. In einer ersten Position des Testbandes 114 ist die Analysezone 116 bzw. die Gruppe von Analysezonen 116 in der Messposition 136, in einer zweiten Position des Testbands 114 hingegen die zugehörige Codierung 118.

In dem in Figur 3 dargestellten Ausführungsbeispiel umfasst die Codierung 118 bzw. die optische Information 119 dieser Codierung 118 ein Codierungsfeld 162 für die Artikel-spezifischen Informationen. Dieses Codierungsfeld 162 kann, wie oben beschrieben, gleichzeitig auch als Positionierungsmarker eingesetzt werden. Wie in Figur 3 ebenfalls gestrichelt dargestellt, kann jedoch, alternativ oder zusätzlich, als Positionierungsmarker 120 auch ein separater Positionierungsmarker in der Codierung 118 vorgesehen sein. Dieser Positionierungsmarker 120 kann beispielsweise ebenfalls in einem vorgegebenen Abstand zu der Analysezone 116 angeordnet sein, so dass der Abstand X zwischen der Codierung 118 und der zugehörigen Analysezone 116 beispielsweise auch von diesem separaten Positionierungsmarker 120 aus definiert werden kann.

In beiden Fällen, also in dem Fall, in welchem die Codierung 118 einen separaten Positionierungsmarker 120 umfasst, oder in dem Fall, in welchem das die Artikel-spezifische Information enthaltende Codierungsfeld 162 der Codierung 118 auch zur Positionierung verwendet wird, ist vorzugsweise ein und derselbe Detektor 124 auch in der Lage, alle Elemente 116, 118, 120 zu erkennen und steht daher für die Glucosebestimmung, die Positionserkennung und die Auswertung der Artikel-spezifischen Information zur Verfügung. Es sind jedoch grundsätzlich auch andere Ausgestaltungen im Rahmen der vorgeschlagenen Decodiervorrichtung 111 möglich, beispielsweise eine getrennte Erfassungsvorrichtung 125.

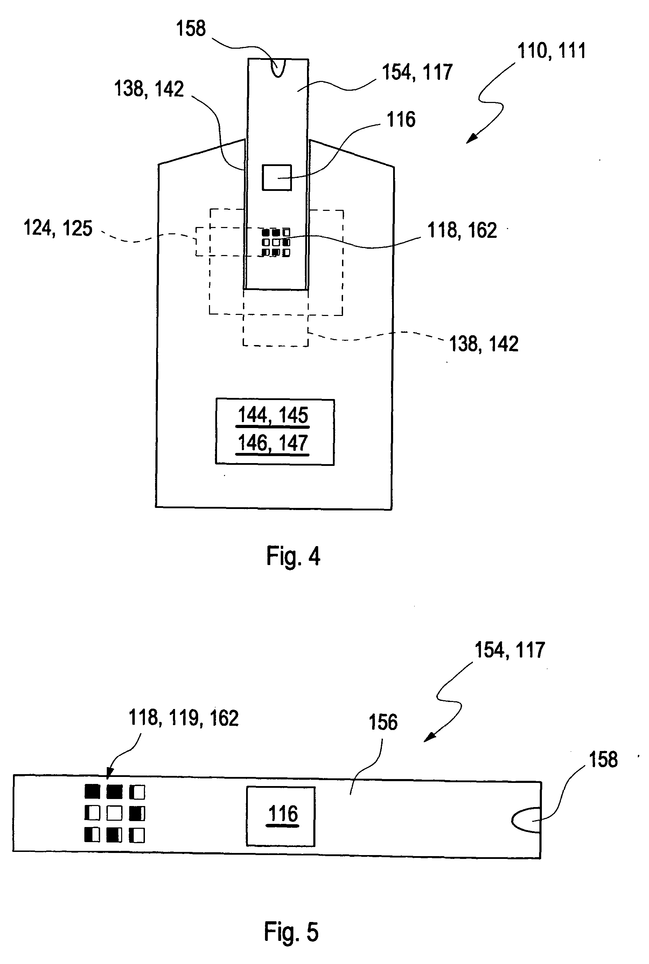

In den Figuren 1 bis 3 wurde das erfindungsgemäße Analysesystem 110 bzw. die Decodiervorrichtung 111 am Beispiel eines medizinischen Einwegartikels 117 in Form eines Testbands 114 erläutert. In den Figuren 4 und 5 ist ein Ausführungsbeispiel dargestellt, welches auf der Verwendung von Teststreifen 154 als medizinischem Einwegartikel 117 beruht. Diese Teststreifen 154, welche in Figur 5 als Ausführungsbeispiel einzeln dargestellt sind, umfassen wiederum einen Träger 156, beispielsweise einen Papier- und/oder Keramikträger: An einem vorderen Ende weist dieser Träger 156 eine Applikationszone 158 auf, in welcher eine flüssige Probe, beispielsweise ein Blutstropfen, auf den Teststreifen 154 aufgebracht werden kann. Über Kapillarkräfte wird diese flüssige Probe zu einer Analysezone 116 des Teststreifens 154 transportiert, um dort eine Analyt-Spezifische Farbreaktion zu bewirken, entsprechend des Anteils an Glucose in der flüssigen Probe.

An einem der Applikationszone 158 in diesem Ausführungsbeispiel gegenüberliegenden Ende weist der Teststreifen 154 weiterhin wiederum eine Codierung 118 mit einer optischen Information 119 auf, welche die Artikel-spezifische Information in verschlüsselter Form enthält. Auch in diesem Ausführungsbeispiel ist die Codierung 118 wiederum lediglich angedeutet, so dass diese neben der dargestellten zweidimensionalen optischen Information beispielsweise wiederum auch eine eindimensionale Codierung, beispielsweise in Form von hintereinander angeordneten einzelnen Feldern, umfassen kann. Für ein mögliches Ausführungsbeispiel der Codierung 118 kann wiederum auf die nachfolgende Figur 6 verwiesen werden. Wiederum ist diese Codierung 118 optisch auslesbar. Weiterhin kann, neben der Artikel-spezifischen Information, die Codierung 118 wiederum auch einen oder mehrere Positionierungsmarker 120 umfassen, was in Figur 5 nicht dargestellt ist, was jedoch optional möglich ist und die Positionierung erleichtern kann. Alternativ oder zusätzlich kann jedoch auch der die Artikel-spezifische Information umfassende Teil der Codierung 118 gleichzeitig auch als Positionierungsmarker 120 verwendet werden.

Bei dem in Figur 4 dargestellten Ausführungsbeispiel des Analysesystems 110, welches gleichzeitig als Decodiervorrichtung 111 fungiert oder eine derartige Decodiervorrichtung 111 umfasst, kann wiederum eine Führung 138 als Bestandteil einer Transfereinrichtung 142 für den Teststreifen 154 vorgesehen sein. Diese Führung 138 bewirkt, dass der Teststreifen 154 lateral an einem Detektor 124 vorbeigeführt werden kann, welcher in Figur 4 lediglich schematisch angedeutet ist. Dieser Detektor 124 kann wiederum im Rahmen der vorgeschlagenen Decodiervorrichtung 111 gleichzeitig als Erfassungsvorrichtung 125 eingesetzt werden. Auch eine separate Erfassungsvorrichtung 125, welche von dem Detektor 124 zur Detektion der Analysezone 116 getrennt ist, kann jedoch grundsätzlich eingesetzt werden. In einer in Figur 4 dargestellten zweiten Position ist dabei bei dem dargestellten Ausführungsbeispiel die Codierung 118 ganz oder teilweise im Sichtfeld des Detektors 124 angeordnet. Wird der Teststreifen 154 weiter in das Analysesystem 110 hineingeschoben, zu welchem Zweck die Führung 138 beispielsweise entsprechend langgestreckt ausgeführt sein kann, so gerät die Analysezone 116 des Teststreifens 154 in das Sichtfeld des Detektors 124, und der Teststreifen 154 befindet sich in einer ersten Position. In dieser ersten Position kann eine Auswertung der beschriebenen Farbreaktion der Analysezone 116 erfolgen. Ansonsten kann die Funktionalität des Analysesystems 110 gemäß Figur 4 im Wesentlichen der Funktionalität des Analysesystems 110 gemäß den Figuren 1 und 2 entsprechen.

In den Figuren 6 bis 9 sind verschiedene Ausführungsbeispiele der Codierung 118 (bzw. der die Artikel-spezifische Information enthaltenden optischen Information 119) sowie Beispiele eines Verfahrens zur Auswertung mittels einer Histogrammanalyse dargestellt. Dabei zeigt Figur 6 ein Ausführungsbeispiel der Codierung 118, bei welchem die Codierung 118 ein zweidimensionales Codierungsfeld 162 umfasst. Wie oben beschrieben, kann die Codierung 118 zusätzlich noch einen oder mehrere Positionierungsmarker 120 umfassen, oder das Codierungsfeld 162, welches die Artikel-spezifische Information in codierter Form umfasst, kann gleichzeitig auch zur Positionierung des Testbands 114 und/oder des Teststreifens 154 eingesetzt werden. Die in Figur 6 dargestellte Codierung 118 ist grundsätzlich auf Testbändern 114, auf Teststreifen 154 oder auf anderen Arten von medizinischen Einwegartikeln 117 einsetzbar.

Die zweidimensionale Codierung mit der optischen Information 118 in dem Codierungsfeld 162 nutzt in vorteilhafter Weise die Tatsache aus, dass der Detektor 124, welcher zur Auswertung der Analysezone 116 eingesetzt wird, in vielen Fällen als ortsauflösender Detektor 124 mit einem ortsauflösenden Bildsensor 130 ausgestattet ist, beispielsweise in Form eines kompakten Sensor-Arrays. Wie beispielsweise in EP 1 843 148 A1 beschrieben, kann auch die Auswertung der Analysezone 116 mittels einer Grauwertanalyse, insbesondere mittels eines Grauwerthistogramms, durchgeführt werden. Diese Histogrammerstellung kann beispielsweise direkt in dem Detektor 124, beispielsweise in einem CMOS-Chip des Detektors 124, implementiert werden. Auf ähnliche Weise können auch die Graustufen der optischen Information 119 der Codierung 118 ausgewertet werden, beispielsweise ebenfalls wieder ganz oder teilweise im CMOS-Chip des Detektors 124 und/oder in einer anderen Art von Auswertungsvorrichtung 145. Die Vorteile der vollständigen oder teilweisen Implementierung der Auswertungsvorrichtung 145 in den Bildsensor 130, beispielsweise den CMOS-Chip des Detektors 124, bestehen in einem reduzierten Aufwand für eine periphere Hardware, d.h. in reduzierten Taktzeiten, der möglichen Vermeidung von Bildspeichern und einem verringerten Energiebedarf.

Anhand des Beispiels der Codierung in Figur 6 soll im Folgenden ein Beispiel einer Verschlüsselung Artikel-spezifischer Informationen in der Codierung 118 bzw. der optischen Information 119 beschrieben werden, sowie ein Beispiel der Entschlüsselung dieser Informationen. Die Codierung 118 umfasst die optische Information 119 in Form des oben beschriebenen Codierungsfelds 162, welches im vorliegenden Ausführungsbeispiel eine zumindest näherungsweise quadratische Form aufweisen kann. Das Codierungsfeld 162 umfasst eine Mehrzahl von (in diesem Ausführungsbeispiel 9) Feldern 164, welche für sich genommen ebenfalls wiederum quadratische oder zumindest näherungsweise quadratische Gestalt aufweisen können und welche in einer 3x3 Matrix angeordnet sind. Die Felder 164 können umrandet oder auch ohne Rand ausgestaltet sein. Auch eine andere Anordnung der Felder 164 ist grundsätzlich möglich, beispielsweise eine lineare Anordnung mit neun hintereinander angeordneten Feldern.

Wie in Figur 6 dargestellt, sind die Felder 164 zu unterschiedlichen Füllgraden mit Graustufen angefüllt. Dieses Ausführungsbeispiel einer Codierung 118 mit zweidimensionalen optischen Informationen 119 mit einer Graustufencodierung bietet somit die Möglichkeit, eine Histogrammauswertung durchzuführen. Diese Histogrammauswertung kann, wie oben dargestellt, eine einfache Häufigkeitsverteilung beinhalten und muss nicht notwendigerweise, wie in Figur 7 dargestellt, eine grafische Auswertung beinhalten.

Zum Zweck der Histogrammauswertung kann, wenn sich das Testelement in Form des Testbands 114 und/oder des Teststreifens 154 in der oben beschriebenen zweiten Position befindet, in welcher die Codierung 118 zumindest teilweise im Sichtbereich des Detektors 124 und somit in der Messposition 136 angeordnet ist, ein Bild der Codierung 118 bzw. des Codierungsfelds 162 aufgenommen werden. Aus dem Füllgrad jedes einzelnen Feldes 164 kann nun jeder Graustufe eine bestimmte Anzahl von Pixeln mit diesem Grauwert zugeordnet werden. Im Beispiel sind 9 Grauwerte dargestellt, von denen jeder 4 Füllgrade annehmen kann, d.h. von ganz ausgefüllt (wie in dem schwarzen Feld in der linken oberen Ecke) über 3/4 ausgefüllt, 1/2 ausgefüllt bis hin zu 1/4 ausgefüllt. Zur Verdeutlichung des Füllgrades sind die Ränder der quadratischen Felder 164 in Figur 6 noch mit markiert, was jedoch nicht notwendigerweise der Fall sein muss. Insgesamt ergeben sich mit der in Figur 6 gezeigten Codierung 36 Kombinationsmöglichkeiten (9 Grauwerte x 4 Füllgrade). Dies stellt lediglich ein Ausführungsbeispiel einer möglichen Codierung dar. Auch andere Anzahlen möglicher Graustufen und/oder Füllgrade sind denkbar.

Aus der in Figur 6 dargestellten Codierung würde sich beispielsweise ein in Figur 7 dargestelltes Grauwerthistogramm ergeben. Dabei ist über jeder Graustufe g, wobei die Graustufen hier von 1 bis 9 durchnummeriert sind, der Füllgrad a in % aufgetragen. Versteht man die Reihenfolge der Graustufen g im Histogramm gemäß Figur 7 als Ordnung, d.h. zum Beispiel als Ziffernfolge, so kann man mit diesem 9-Felder-Code mit 4 Füllgraden 4⁹ gleich 262144 Zahlen erzeugen, wozu beispielsweise mit einem standardisierten Strichcode eine Tiefe von 18 Bit notwendig wäre, da 2¹⁸ gleich 4⁹ ist.

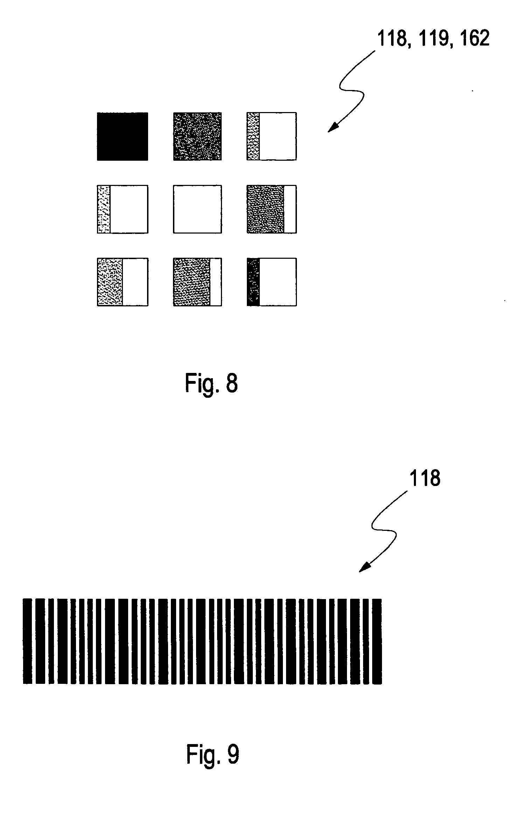

In den Figuren 8 und 9 wird als Beispiel die Zahl "262144" in der erfindungsgemäßen Grauwert-Codierung (Figur 8) einer Darstellung in einem handelsüblichen Strichcode (Code 25, Figur 9) gegenübergestellt. Deutlich ist dabei die durch die Erweiterung von 2 (schwarz/weiß) auf 9 Graustufen ermöglichte Reduzierung des Platzbedarfs für eine Codierung bei gegebener Linienauflösung (hier 300 dpi), wobei die Grauwertcodierung sogar noch deutlich verkleinert werden könnte. Im Gegenzug könnte, bei gleichbleibendem Platzbedarf für die Codierung 118 bzw. die optische Information 119 auf dem medizinischen Einwegartikel 117, die Speichertiefe bzw. die Anzahl der in der Codierung 118 verschlüsselbaren Informationen, beispielsweise Artikel-spezifische Informationen, deutlich erhöht werden.

Speziell bei einer Grauwertcodierung ist hervorzuheben, dass die Auslesung mittels eines Histogramms zumindest weitgehend unempfindlich ausgestaltet werden kann gegenüber einer Translation und/oder Rotation. Die kann, wie es beispielsweise in EP 1 843 148 A1 beschrieben wird, beispielsweise durch eine direkte, unmittelbare Grauwert-Füllgrad-Auswertung erfolgen, ohne den "Umweg" über eine ortsaufgelöste Erfassung von Bildinformationen. Dies bedeutet, dass auch eine Verkippung des Teststreifens 154 bzw. des Testbands 114 ein einwandfreies Auslesen der Codierung 118 ermöglichen kann. Ebenso ist die Form der Codierung weitgehend flexibel, so dass statt quadratischer Felder 164 und/oder quadratischen Codierungsfeldern 162 auch horizontal und/oder vertikal ausgerichtete Rechtecke, Kreise, diagonale Linien unterschiedlicher Grauwerte und Dicke oder ähnliches benutzt werden könnten.

Bei der Wahl der in Figur 6 dargestellten 9 Graustufen und 4 Füllfaktoren handelt es sich ebenfalls um eine vereinfachte, beispielhafte Darstellung. Konzeptionell liegt der Ausfiihrung der Erfindung die Tatsache zugrunde, dass die Anzahl der erkennbaren Grauwerte bei auf eine Glucosebestimmung optimierten Analysesystemen 110 ja gerade dafür ausgelegt ist, möglichst genau Grauwerte zu bestimmen. Speziell dieser Vorteil kann, insbesondere wenn derselbe Detektor 124 auch als Erfassungsvorrichtung 125 zum Auslesen der optischen Information 119 genutzt wird, auch für die Auslesung der Codierung 118 genutzt werden. Während für die Glucosebestimmung konzeptionell die Anforderungen an die Genauigkeit der Messung bei ca. 0,1 % Remission über einen Bereich von ca. 50 % Remission liegt und daher 500 Graustufen erkennbar sein sollten, erscheint es somit realistisch, zumindest 50 Graustufen für eine Grauwertcodierung getrennt erkennen zu können. Wird beispielsweise ein Detektor 124 mit einem Bildsensor 130 mit 10⁶ Pixeln eingesetzt, so würden für jede Graustufe 20000 Pixel zur Verfügung stehen. Eine Poisson-Verteilung vorausgesetzt, könnte die Anzahl der Pixel eines bestimmten Grauwerts dann theoretisch auf 0,7 % genau bestimmt werden. Somit ließen sich die Füllfaktoren in 141 Stufen unterteilen. Unter Berücksichtigung der technischen Umsetzbarkeit, insbesondere der Randeffekte und der Breite der Grauwertverteilungen, erscheinen zumindest 30 Stufen als rcalisicrbar. Es lässt sich insgesamt zeigen, dass die Randcffckte bei gegebener Fläche eines rechtwinkligen Vierecks dann minimal sind, wenn das Rechteck ein Quadrat ist, woraus sich ergibt, dass quadratische Felder 164 und/oder quadratische Codierungsfelder 162 zu bevorzugen sind. In einem Bild hätte man somit die Möglichkeit, 50³⁰ Zahlen zu codieren, was einer binären Informationstiefe von ca. 170 Bit entspricht. Bei einem Informationsbedarf von beispielsweise 406 Bit ließe sich somit die Information in maximal 3 Bildern des Detektors darstellen.

Sind die Zahlenpaare Grauwert und Füllgrad, wie beispielsweise in Figur 7 anhand der Histogrammanalyse gezeigt, ermittelt, so können bei der Codierung von Zahlen auch die Rollen von Grauwert und Füllgrad vertauscht werden. So kann beispielsweise nach Füllgraden geordnet werden, anstelle einer Ordnung nach Grauwerten. Der Grauwert kann dann anstelle des Füllgrades den Wert dieser Stelle im Code wiedergeben. Auf diese Weise lassen sich sogar in dem obigen Beispiel 30⁵⁰ anstelle von 50³⁰ Zahlen darstellen, was in einem binären System einer Bit-Tiefe von 245 Bit entspricht. Es lässt sich leicht zeigen, dass dieser Rollentausch immer dann vorteilhaft ist, wenn die Basis (hier ursprünglich 50) der Potenz größer ist als der Exponent (hier ursprünglich 30).

Für die Erzeugung der Grauwerte ist es nicht unbedingt erforderlich, eine homogene Fläche konstanten Grauwerts zu erzeugen, sondern es können auch auf andere Weise strukturierte Codierungsfelder 162, strukturierte Felder 164 oder andersartig strukturierte Flächen verwendet werden, solange das Bild der Strukturierung am Ort des Detektors deutlich kleiner ist als 1 Pixel. Schraffur und Punktierungen sind Beispiele derartiger Strukturierungen.

Gegebenenfalls ist es weiterhin hilfreich, die Extremwerte Schwarz und Weiß, wie in Figur 6 beispielsweise im ersten Feld der ersten Zeile bzw. im zweiten Feld der zweiten Zeile dargestellt, nicht nur zum Auslesen der Codierung, sondern zugleich für die Skalierung des Analysesystems 110 zu verwenden. In einem Histogramm der in Figur 7 dargestellten Art kann dann, nach Auslesen der Codierung, anhand dieser Schwarz-Weiß-Information über die Referenzwerte "Schwarz" und "Weiß" eine Kalibration als Referenz für die Ermittlung der Glucosekonzentration über die Analysezone 116 erfolgen. Durch diese Kalibration kann das Analysesystem 110 robuster gegen Schwankungen in der Sensorempfindlichkeit, gegenüber einer Degradation der Beleuchtungslichtstärke der Lichtquelle 134 (beispielsweise der LEDs) oder gegenüber ähnlichen Schwankungen ausgestaltet werden.

Die anhand der Figuren 6 und 7 beschriebene Graustufencodierung lässt sich auch lediglich für einen Teil der erforderlichen Artikel-spezifischen Informationen einsetzen. So kann beispielsweise die Chargencodierung mittels der Codierung 118 lediglich für einen Teil des erforderlichen Codes verwendet werden, wobei der verbleibende Teil der Codierung auf einem anderen Codierungsmedium verbleiben kann ("Split-Code"). Beispiele derartiger Split-Codes sind in der Anmeldung PCT/EP2008/004293 beschrieben. So können beispielsweise ein zusätzliches Codiermedium, beispielsweise in Form eines Barcodes auf der Bandkassette 112, in Form eines ROM Keys oder ähnliche zusätzliche Codiermedien verwendet werden.

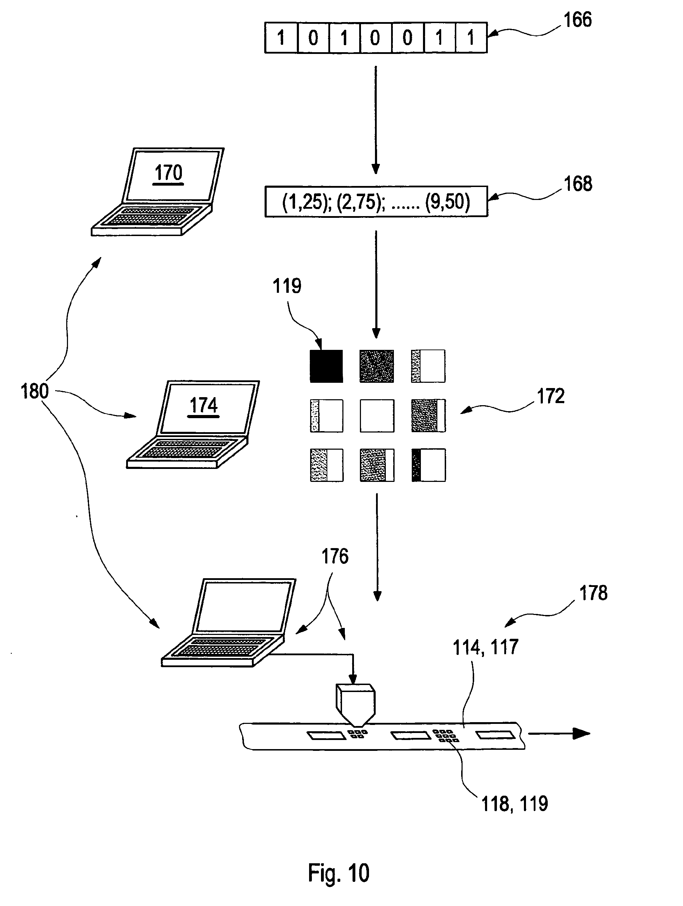

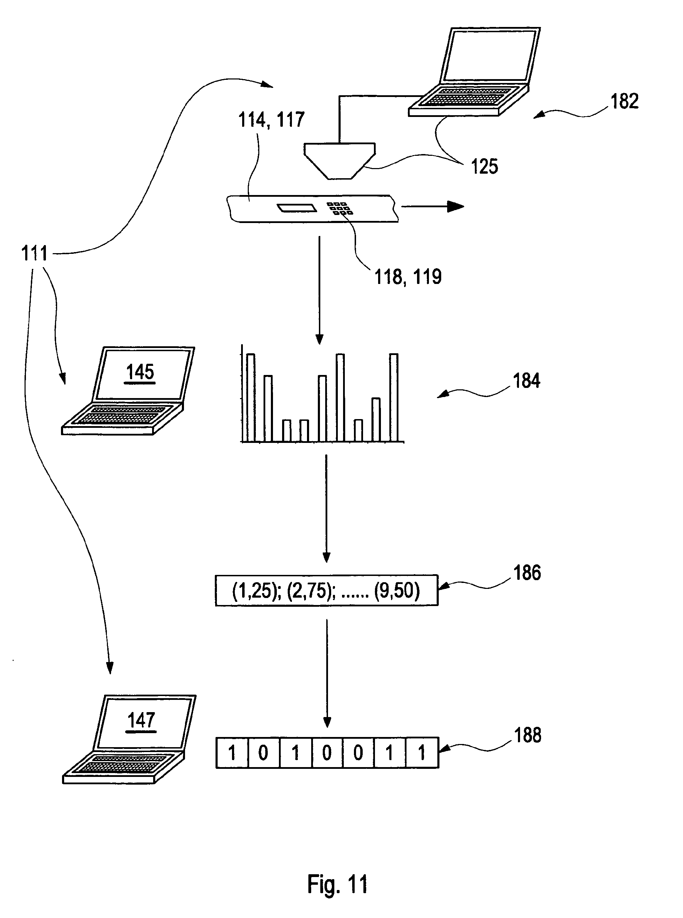

In den Figuren 10 und 11 sind schließlich in einer schematischen Darstellung ein Ablaufplan eines möglichen Ausführungsbeispiels eines erfindungsgemäßen Codierungsverfahrens (Figur 10) bzw. eines erfindungsgemäßen Decodierungsverfahrens (Figur 11) dargestellt. Die einzelnen Verfahrensschritte sind dabei lediglich schematisch angedeutet, wobei für mögliche Ausgestaltungen dieser Verfahrensschritte weitgehend auf die obige Beschreibung verwiesen werden kann. Weiterhin können noch zusätzliche, in den Figuren 10 und 11 nicht aufgeführte Verfahrensschritte umfasst sein. Zudem ist die dargestellte Reihenfolge nicht unbedingt zwingend erforderlich, so dass beispielsweise ein oder mehrere Verfahrensschritte in anderer Reihenfolge als der dargestellten Reihenfolge durchgeführt werden können, zeitlich parallel oder zeitlich überlappend durchgeführt werden können oder auch einzeln oder in Gruppen wiederholt durchgeführt werden können.

Bei dem in Figur 10 dargestellten Codierungsverfahren wird zunächst in Verfahrensschritt 166 mindestens eine Information bereitgestellt. Diese Information kann beispielsweise eine Artikel-spezifische Information umfassen und kann beispielsweise manuell, über einen Datenträger, ein Netzwerk, eine Produktionsvorrichtung für Testelemente oder ähnliches bereitgestellt werden. Die Artikel-spezifische Information ist in Figur 10 lediglich symbolisch angedeutet.

In Verfahrensschritt 168 wird die Information in einen Code umgewandelt, welcher eine Mehrzahl von Paaren aus einem Grauwert und einem Füllgrad umfasst. Dieses Umwandeln in Schritt 168 kann beispielsweise anhand einer vorgegebenen Umwandlungsvorschrift erfolgen, wie sie dem Fachmann beispielsweise aus dem Bereich der Umwandlung üblicher Informationen in binäre Codes bekannt ist. Dabei kann an erster Stelle der Paare beispielsweise ein Grauwert eingesetzt werden, und an zweiter Stelle ein Füllgrad, oder umgekehrt, wie oben dargestellt. Die Zuordnungsvorschriften zur Erzeugung des Codes in Schritt 168 können beispielsweise in einem Computer, in einer elektronischen Tabelle oder in einer anderen Art von Codeerzeugungsvorrichtung 170 hinterlegt sein, wie in Figur 10 symbolisch angedeutet.

In einem nächsten Verfahrensschritt, Schritt 172, wird dann der Code in Form der Grauwert-Füllgrad-Paare, welcher in Schritt 168 erzeugt wurde, in eine zweidimensionale optische Information 119 umgewandelt. Diese Umwandlung kann mittels einer entsprechenden Umwandlungsvorrichtung 174 erfolgen, wie in Figur 10 ebenfalls wieder symbolisch angedeutet.

Anschließend wird die derart erzeugte optische Information 119 mittels einer Aufbringvorrichtung 166 in einem Verfahrensschritt 178 auf den medizinischen Einwegartikel 117, welcher hier beispielhaft in Form eines Testbandes 114 symbolisiert ist, aufgebracht. Diese Aufbringvorrichtung 176 kann beispielsweise eine Druckvorrichtung, eine Etikettiervorrichtung oder eine andere Art von Aufbringvorrichtung umfassen, sowie gegebenenfalls wiederum, wie in Figur 10 ebenfalls angedeutet, ein Datenverarbeitungssystem.

Die Codeerzeugungsvorrichtung 170, die Umwandlungsvorrichtung 174 und die Aufbringvorrichtung 176 sind dabei in Figur 10 symbolisch als verschiedene Vorrichtungen dargestellt und bilden gemeinsam eine Codiervorrichtung 180. Es sei darauf hingewiesen, dass diese Codiervorrichtung 180 auch unterschiedlich zu der in Figur 10 gezeigten Ausführungsform ausgestaltet sein kann. So können beispielsweise die Vorrichtungen 170, 174 und 176 auch ganz oder teilweise zusammengefasst sein. Beispielsweise kann die Umwandlungsvorrichtung 174, in welcher die optische Information 119 erzeugt wird, auch ganz oder teilweise in der Aufbringvorrichtung 176 angeordnet sein, so dass aus den in Verfahrensschritt 168 erzeugten Grauwert-Füllgrad-Paaren auch erst unmittelbar beim Aufbringen in Schritt 178 die optische Information 119 erzeugt werden kann, beispielsweise mittels eines entsprechenden Druckers, welcher unmittelbar die Grauwert-Füllgrad-Paare als Eingabeinformation verarbeiten und umwandeln kann.

In Figur 11 ist ein schematischer Ablaufplan eines erfindungsgemäßen Decodierungsverfahrens dargestellt. Die Anmerkungen hinsichtlich möglicher weiterer Verfahrensschritte, anderer Reihenfolgen, zeitlich paralleler Durchführungen und ähnlichen Hinweisen zu der schematischen Darstellung, welche oben zur Figur 10 angeführt wurden, gelten analog auch für Figur 11. Das in Figur 11 dargestellte Decodierungsverfahren kann insbesondere zur Decodierung einer mittels des Verfahrens gemäß Figur 10 hergestellten Codierung verwendet werden.

In einem ersten Verfahrensschritt, Schritt 182, wird mittels einer Erfassungsvorrichtung 125 die optische Information 119 des Codes 118 erfasst. Die Erfassungsvorrichtung 125 ist in Figur 11 lediglich wiederum symbolisch dargestellt und umfasst beispielsweise eine Datenverarbeitungsvorrichtung. Wie oben anhand der Figur 2 beschrieben, kann diese Datenverarbeitungsvorrichtung beispielsweise ganz oder teilweise in dem Bildsensor 130 und/oder in einer separaten Auswerteeinheit 144 integriert sein.

Anschließend wird in den Schritten 184 und 186, welche auch zu einem gemeinsamen Schritt zusammengefasst sein können, mittels einer Histogrammanalyse (Schritt 184) die optische Information 119 in einen Code aus Grauwert-Füllgrad-Zahlenpaaren umgewandelt. Dies kann beispielsweise wiederum ganz oder teilweise in einer Auswertungsvorrichtung 145 erfolgen. Die Trennung der Schritte 184 und 186 in Figur 11 deutet eine Option an, welche oben beschrieben wurde, und nach welcher die eigentliche Histogrammanalyse in Schritt 184 beispielsweise in dem Bildsensor 130 als Auswertungsvorrichtung 145 erfolgen kann, wohingegen die eigentliche Umwandlung in einen Code beispielsweise in der Auswerteeinheit 144 eines Analysesystems 110 als Auswertungsvorrichtung 145 erfolgen kann. Die Umwandlung in den Code aus Grauwert-Füllgrad-Zahlenpaaren in den Schritten 184 und 186 stellt prinzipiell eine Umkehrung der in Figur 10 beschriebenen Codierung in den Schritten 168 und 172 dar, so dass zumindest weitgehend auf die obige Beschreibung verwiesen werden kann.

Anschließend wird in Verfahrensschritt 188 aus dem in Schritt 186 erzeugten Code die ursprüngliche Information wiedergewonnen. Dies stellt prinzipiell eine Umkehrung des Schrittes 166 bzw. 168 in Figur 10 dar, so dass diesbezüglich wiederum weitgehend auf die obige Beschreibung verwiesen werden kann. Beispielsweise kann zu diesem Zweck wiederum eine Entschlüsselungsvorrichtung 147 verwendet werden, welche beispielsweise ganz oder teilweise bauteilidentisch mit der Auswerteeinheit 144 eines Analysesystems 110 sein kann. Die Komponenten 125, 145 und 147 bilden somit gemeinsam eine Decodiervorrichtung 111, welche beispielsweise in einem Analysesystem 110 verwendet werden kann oder welche selbst als Analysesystem 110 ausgestaltet sein kann. Auf diese Weise lassen sich beispielsweise Artikel-spezifische Informationen von medizinischen Einwegartikeln 117 in Form von Testbändern 114 und/oder Teststreifen 154 auslesen und bei der Analyse von flüssigen Proben verwenden. Wiederum sei darauf hingewiesen, dass auch eine andere Ausgestaltung der Decodiervorrichtung 111 möglich ist, beispielsweise eine andere Art der Zusammenfassung der Komponenten 125, 145 und 147.

### Bezugszeichenliste

- 110: Analysesystem
- 111: Decodiervorrichtung
- 112: Bandkassette
- 114: Testband
- 116: Analysezone
- 117: medizinischer Einwegartikel
- 118: Codierung
- 119: optische Information
- 120: Positionierungsmarker
- 122: Positionierungsfenster
- 124: Detektor
- 125: Erfassungsvorrichtung
- 126: Optikmodul
- 128: Aussparung
- 130: Bildsensor
- 132: ortsauflösende Optik
- 134: Lichtquelle
- 136: Messposition
- 138: Führung
- 140: Antriebsvorrichtung
- 142: Transfereinrichtung
- 144: Auswerteeinheit
- 145: Auswertungsvorrichtung
- 146: Steuerung
- 147: Entschlüsselungsvorrichtung
- 148: Träger
- 150: Codierungs-Analysezonen-Paar
- 152: Spulrichtung
- 154: Teststreifen
- 156: Träger
- 158: Applikationszone
- 160: Detektor
- 162: Codierungsfeld
- 164: Felder
- 166: Bereitstellen Information
- 168: Umwandeln in Code
- 170: Codeerzeugungsvorrichtung
- 172: Umwandeln in optische Information
- 174: Umwandlungsvorrichtung
- 176: Aufbringvorrichtung
- 178: Aufbringen optische Information
- 180: Codiervorrichtung
- 182: Erfassen optische Information
- 184: Histogrammanalyse
- 186: Umwandeln in Code

## Patentansprüche

1. Codierungsverfahren zum Erzeugen mindestens einer Codierung (118) auf einem Artikel, insbesondere einem medizinischen Einwegartikel (117), wobei die Codierung (118) mindestens eine Information in codierter Form umfasst, wobei das Verfahren folgende Schritte umfasst:
a) die mindestens eine Information wird in einen Code umgewandelt, wobei der Code eine Mehrzahl von Paaren aus einem Grauwert und einem Füllgrad umfasst;
b) der Code wird in eine optische Information (119), insbesondere eine zweidimensionale optische Information (119), umgewandelt, wobei die optische Information (119) mindestens ein bis zu einem zugehörigen Füllgrad mit mindestens einem Grauwert angefülltes Feld (164) entsprechend der Mehrzahl von Paaren aus einem Grauwert und einem Füllgrad umfasst; und
c) die optische Information (119) wird auf den Artikel aufgebracht.

2. Codierungsverfahren nach dem vorhergehenden Anspruch, wobei das mindestens eine Feld (164) eine Mehrzahl von Feldern (164) umfasst, wobei jedes Feld (164) einem bestimmten Grauwert zugeordnet ist und mit diesem bis zu dem zugehörigen Füllgrad ausgefüllt ist.

3. Computerprogramm mit Programmcode zur Durchführung der Verfahrensschritte a) und b) des Codierungsverfahrens nach einem der vorhergehenden Ansprüche, wenn das Programm in einem Computer ausgeführt wird.

4. Codiervorrichtung (180) zum Erzeugen mindestens einer Codierung (118) auf einem Artikel, insbesondere einem medizinischen Einwegartikel (117), insbesondere unter Verwendung eines Codierverfahrens nach einem der vorhergehenden, ein Codierverfahren betreffenden Ansprüche, wobei die Codierung (118) mindestens eine Information in codierter Form umfasst, wobei die Codiervorrichtung (180) umfasst:
A) mindestens eine Codeerzeugungsvorrichtung (170), wobei die Codeerzeugungsvorrichtung (170) eingerichtet ist, um die mindestens eine Information in einen Code umzuwandeln, wobei der Code eine Mehrzahl von Paaren aus einem Grauwert und einem Füllgrad umfasst;
B) mindestens eine Umwandlungsvorrichtung (174), wobei die Umwandlungsvorrichtung (174) eingerichtet ist, um den Code in eine optische Information (119) umzuwandeln, insbesondere in eine zweidimensionale optische Information (119), wobei die optische Information (119) mindestens ein bis zu einem zugehörigen Füllgrad mit mindestens einem Grauwert angefülltes Feld (164) entsprechend der Mehrzahl von Paaren aus einem Grauwert und einem Füllgrad umfasst; und
C) mindestens eine Aufbringvorrichtung (176), wobei die Aufbringvorrichtung (176) eingerichtet ist, um die optische Information (119) auf den Artikel aufzubringen.

5. Decodierungsverfahren zur Decodierung mindestens einer codierten Information auf einem Artikel, insbesondere auf einem medizinischen Einwegartikel (117), insbesondere einer mittels eines Codierverfahrens nach einem der vorhergehenden, ein Codierverfahren betreffenden Ansprüche erzeugten Codierung (118), wobei das Verfahren folgende Schritte umfasst:
i) mindestens eine auf dem Artikel aufgebrachte optische Information (119), insbesondere eine zweidimensionale optische Information (119), wird erfasst, wobei die optische Information (119) mindestens ein bis zu einem zugehörigen Füllgrad mit mindestens einem Grauwert angefülltes Feld (164) umfasst;
ii) die optische Information (119) wird mittels einer Histogrammanalyse in einen Code umgewandelt, wobei der Code eine Mehrzahl von Paaren aus einem Grauwert und einem Füllgrad, entsprechend der Histogrammanalyse, umfasst; und
iii) der Code wird in die Information umgewandelt.

6. Computerprogramm mit Programmcode zur Durchführung der Verfahrensschritte ii) und iii) des Decodierungsverfahrens nach dem vorhergehenden Anspruch, wenn das Programm in einem Computer ausgeführt wird.

7. Decodiervorrichtung (111) zur Decodierung mindestens einer codierten Information auf einem Artikel, insbesondere auf einem medizinischen Einwegartikel (117), insbesondere unter Verwendung eines Decodierungsverfahrens gemäß einem der vorhergehenden, ein Decodierverfahren betreffenden Ansprüche, wobei die Decodiervorrichtung (111) umfasst:
I) mindestens eine Erfassungsvorrichtung (125) zum Erfassen mindestens einer auf dem Artikel aufgebrachten optischen Information (119), insbesondere einer zweidimensionalen optischen Information (119), wobei die optische Information (119) mindestens ein bis zu einem zugehörigen Füllgrad mit mindestens einem Grauwert angefülltes Feld (164) umfasst;
II) mindestens eine Auswertungsvorrichtung (145), welche eingerichtet ist, um die optische Information (119) mittels einer Histogrammanalyse in einen Code umzuwandeln, wobei der Code eine Mehrzahl von Paaren aus einem Grauwert und einem Füllgrad, entsprechend der Histogrammanalyse, umfasst; und
III) mindestens eine Entschlüsselungsvorrichtung (147) zum Umwandeln des Codes in die Information.

8. Decodiervorrichtung (111) nach dem vorhergehenden Anspruch, wobei die Decodiervorrichtung (111) mindestens ein Analysesystem (110) zum Nachweis mindestens eines Analyten in einer Probe, insbesondere einer Körperflüssigkeit, unter Verwendung mindestens eines Testelements (114; 154) und/oder einer Lanzette umfasst.

9. Decodiervorrichtung (111) nach dem vorhergehenden Anspruch, wobei das Testelement (114; 154) mindestens ein optisches Testfeld (116) zum optischen Nachweis des Analyten umfasst, wobei das Analysesystem (110) mindestens einen optischen Detektor (124) zum Auswerten des optischen Testfeldes (116) umfasst, wobei das Analysesystem (110) eingerichtet ist, um den optischen Detektor (124) als Bestandteil der Erfassungsvorrichtung (125) zum Erfassen der auf dem Artikel aufgebrachten optischen Information (119) einzusetzen.

10. Decodiervorrichtung (111) nach einem der vorhergehenden, eine Decodiervorrichtung (111) betreffenden Ansprüche, weiterhin umfassend mindestens einen Artikel, insbesondere einen medizinischen Einwegartikel (117), wobei die optische Information (119) auf dem Artikel aufgebracht ist.

11. Decodiervorrichtung (111) nach einem der vorhergehenden, eine Decodiervorrichtung (111) betreffenden Ansprüche, wobei die Erfassungsvorrichtung (125) mindestens einen Bildsensor (130) zur Erfassung zweidimensionaler Bildinformationen aufweist, insbesondere einen CCD-Chip und/oder einen CMOS-Chip.

12. Medizinischer Einwegartikel (117), umfassend mindestens eine Codierung (118), wobei die Codierung (118) mittels eines Codierungsverfahrens nach einem der vorhergehenden, ein Codierungsverfahren betreffenden Ansprüche erzeugt ist.

13. Medizinischer Einwegartikel (117) nach dem vorhergehenden Anspruch, wobei der medizinische Einwegartikel (117) mindestens einen der folgenden Einwegartikel (117) umfasst:
- ein Testelement (114; 154), insbesondere ein Testband (114) oder einen Teststreifen (154), zum Nachweis mindestens eines Analyten, insbesondere eines Metaboliten, in einer Probe, insbesondere einer Körperflüssigkeit;
- eine Lanzette zur Erzeugung einer Probe einer Körperflüssigkeit.

14. Medizinischer Einwegartikel (117) nach einem der beiden vorhergehenden Ansprüche, wobei die Codierung (118) mindestens eine Artikel-spezifische Information über den medizinischen Einwegartikel (117) umfasst.

15. Medizinischer Einwegartikel (117) nach dem vorhergehenden Anspruch, wobei der medizinische Einwegartikel (117) ein Teststreifen (154) oder ein Testband (114) mit mindestens einem Testfeld (116) zur Analyse mindestens einer Körperflüssigkeit ist, wobei das Testfeld auf einem Träger (148) aufgebracht ist, wobei die Codierung (118) ebenfalls auf den Träger (148) aufgebracht ist.

## Claims

1. Encoding method for creating at least one code (118) on an article, more particularly a medical disposable article (117), the code (118) comprising at least one item of information in encoded form, the method comprising the following steps:
a) the at least one item of information is converted into a code, the code comprising a plurality of pairs of a greyscale value and a degree of filling;
b) the code is converted into optical information (119), more particularly two-dimensional optical information (119), the optical information (119) comprising at least one field (164) filled up to an associated degree of filling with at least one greyscale value, corresponding to the plurality of pairs of a greyscale value and a degree of filling; and
c) the optical information (119) is applied to the article.

2. Encoding method according to the preceding claim, wherein the at least one field (164) comprises a plurality of fields (164), with each field (164) being assigned a specific greyscale value and being filled therewith up to the associated degree of filling.

3. Computer program with program code for carrying out method steps a) and b) of the encoding method according to one of the preceding claims when the program is carried out on a computer.

4. Encoding device (180) for generating at least one code (118) on an article, more particularly a medical disposable article (117), more particularly by making use of an encoding method according to one of the preceding claims relating to an encoding method, the code (118) comprising at least one item of information in encoded form, the encoding device (180) comprising:
A) at least one code creation device (170), the code creation device (170) being designed to convert the at least one item of information into a code, the code comprising a plurality of pairs of a greyscale value and a degree of filling;
B) at least one conversion device (174), the conversion device (174) being designed to convert the code into optical information (119), more particularly into two-dimensional optical information (119), the optical information (119) comprising at least one field (164) filled up to an associated degree of filling with at least one greyscale value, corresponding to the plurality of pairs of a greyscale value and a degree of filling; and
C) at least one application device (176), the application device (176) being designed to apply the optical information (119) to the article.

5. Decoding method for decoding at least one item of encoded information on an article, more particularly on a medical disposable article (117), more particularly a code (118) created by means of an encoding method according to one of the preceding claims relating to an encoding method, the decoding method comprising the following steps:
i) at least one item of optical information (119), more particularly two-dimensional optical information (119), applied to the article is captured, the optical information (119) comprising at least one field (164) filled up to an associated degree of filling with at least one greyscale value;
ii) the optical information (119) is converted into a code by means of a histogram analysis, the code comprising a plurality of pairs of a greyscale value and a degree of filling, corresponding to the histogram analysis; and
iii) the code is converted into the information.

6. Computer program with program code for carrying out method steps ii) and iii) of the decoding method according to the preceding claim when the program is carried out on a computer.

7. Decoding device (111) for decoding at least one item of encoded information on an article, more particularly on a medical disposable article (117), more particularly by making use of a decoding method according to one of the preceding claims relating to a decoding method, the decoding device (111) comprising:
I) at least one capture device (125) for capturing at least one item of optical information (119), more particularly two-dimensional optical information (119), applied to the article, the optical information (119) comprising at least one field (164) filled up to an associated degree of filling with at least one greyscale value;
II) at least one evaluation device (145), which is designed to convert the optical information (119) into a code by means of a histogram analysis, the code comprising a plurality of pairs of a greyscale value and a degree of filling, corresponding to the histogram analysis; and
III) at least one decryption device (147) for converting the code into the information.

8. Decoding device (111) according to the preceding claim, wherein the decoding device (111) comprises at least one analysis system (110) for detecting at least one analyte in a sample, more particularly a bodily fluid, by making use of at least one test element (114; 154) and/or a lancet.

9. Decoding device (111) according to the preceding claim, wherein the test element (114; 154) comprises at least one optical test field (116) for optical detection of the analyte, the analysis system (110) comprising at least one optical detector (124) for evaluating the optical test field (116), the analysis system (110) being designed to use the optical detector (124) as a component of the capture device (125) for capturing the optical information (119) applied to the article.

10. Decoding device (111) according to one of the preceding claims relating to a decoding device (111), furthermore comprising at least one article, more particularly a medical disposable article (117), with the optical information (119) being applied to the article.

11. Decoding device (111) according to one of the preceding claims relating to a decoding device (111), wherein the capture device (125) comprises at least one image sensor (130) for capturing two-dimensional image information, more particularly a CCD chip and/or a CMOS chip.

12. Medical disposable article (117), comprising at least one code (118), wherein the code (118) is created by means of an encoding method according to one of the preceding claims relating to an encoding method.

13. Medical disposable article (117) according to the preceding claim, wherein the medical disposable article (117) comprises at least one of the following disposable articles (117):
- a test element (114; 154), more particularly a test tape (114) or a test strip (154), for detecting at least one analyte, more particularly a metabolite, in a sample, more particularly a bodily fluid;
- a lancet for creating a sample of a bodily fluid.

14. Medical disposable article (117) according to one of the two preceding claims, wherein the code (118) comprises at least one item of article-specific information relating to the medical disposable article (117).

15. Medical disposable article (117) according to the preceding claim, wherein the medical disposable article (117) is a test strip (154) or a test tape (114) with at least one test field (116) for analysing at least one bodily fluid, with the test field being applied to a carrier (148), the code (118) likewise being applied to the carrier (148).

## Revendications

1. Procédé de codage destiné à former au moins un code (118) sur un objet, en particulier un article médical (117) à usage unique, le code (118) comportant au moins une information sous forme codée, le procédé comportant les étapes suivantes :
a) la ou les informations sont converties en un code, le code comprenant plusieurs paires constituées d'une valeur de gris et d'un degré de remplissage,
b) le code est converti en une information optique (119), en particulier une information optique (119) en deux dimensions, l'information optique (119) comportant au moins un champ (164) rempli jusqu'à un degré associé de remplissage par au moins une valeur de gris et correspondant aux différentes paires constituées d'une valeur de gris et d'un degré de remplissage et
c) l'information optique (119) est appliquée sur l'article.

2. Procédé de codage selon la revendication précédente, dans lequel le ou les champs (164) comportent plusieurs champs (164), chaque champ (164) étant associé à une valeur de gris définie et étant rempli de cette dernière jusqu'au degré de remplissage associé.

3. Programme informatique doté d'un code de programme permettant d'exécuter les étapes a) et b) du procédé de codage selon l'une des revendications précédentes lorsque le programme est exécuté sur un ordinateur.

4. Ensemble de codage (180) destiné à former au moins un code (118) sur un article, en particulier un article médical (117) à usage unique, en particulier en recourant à un procédé de codage selon l'une des revendications précédentes concernant un procédé de codage, le code (118) comportant sous forme codée au moins une information, l'ensemble de codage (180) comportant :
A) au moins un ensemble (170) de formation de code, l'ensemble (170) de formation de code étant conçu pour convertir la ou les informations en un code, le code comportant plusieurs paires constituées d'une valeur de gris et d'un degré de remplissage,
B) au moins un ensemble de conversion (174), l'ensemble de conversion (174) étant conçu pour convertir le code en une information optique (119), en particulier en une information optique (119) en deux dimensions, l'information optique (119) comportant au moins un champ (164) rempli jusqu'à un degré associé de remplissage par au moins une valeur de gris et correspondant aux différentes paires constituées d'une valeur de gris et d'un degré de remplissage et
C) au moins un ensemble d'application (176), l'ensemble d'application (176) étant conçu pour appliquer l'information optique (119) sur l'objet.

5. Procédé de décodage destiné à décoder au moins une information codée placée sur un article, en particulier sur un article médical (117) à usage unique, en particulier un code (118) formé au moyen d'un procédé de codage selon l'une des revendications précédentes qui concernent un procédé de codage, le procédé comportant les étapes suivantes :
i) saisir au moins une information optique (119) appliquée sur l'article, en particulier une information optique (119) en deux dimensions, l'information optique (119) comportant au moins un champ (164) rempli d'au moins une valeur de gris jusqu'à un degré de remplissage associé,
ii) convertir l'information optique (119) en un code au moyen d'une analyse d'histogramme, le code comportant plusieurs paires constituées d'une valeur de gris et d'un degré de remplissage en correspondance à l'analyse d'histogramme et
iii) convertir le code en l'information.

6. Programme informatique doté d'un code de programme permettant d'exécuter les étapes ii) et iii) du procédé de décodage selon la revendication précédente lorsque le programme est exécuté sur un ordinateur.

7. Ensemble de décodage (111) destiné à décoder au moins une information codée appliquée sur un article, en particulier sur un article médical (117) à usage unique, en particulier en recourant à un procédé de décodage selon l'une des revendications précédentes qui concernent un procédé de décodage, l'ensemble de décodage (111) comportant :
I) au moins un ensemble de saisie (125) qui saisit au moins une information optique (119) appliquée sur l'article, en particulier une information optique (119) en deux dimensions, l'information optique (119) comportant au moins un champ (164) rempli d'au moins une valeur de gris jusqu'à un degré de remplissage associé,
II) au moins un ensemble d'évaluation (145) conçu pour convertir l'information optique (119) en un code au moyen d'une analyse d'histogramme, le code comportant plusieurs paires constituées d'une valeur de gris et d'un degré de remplissage en correspondance à l'analyse d'histogramme et
III) au moins un ensemble de décryptage (147) qui convertit le code en l'information.

8. Ensemble de décodage (111) selon la revendication précédente, l'ensemble de décodage (111) comportant au moins un système d'analyse (110) qui détecte au moins un analyte dans un échantillon, en particulier dans un liquide corporel, en recourant à au moins un élément de test (114; 154) et/ou à une lancette.

9. Ensemble de décodage (111) selon la revendication précédente, dans lequel l'élément de test (114; 154) comporte au moins un champ optique de test (116) qui permet la détection optique de l'analyte, le système d'analyse (110) comportant au moins un détecteur optique (124) pour évaluer le champ optique de test (116), le système d'analyse (110) étant conçu pour utiliser le détecteur optique (124) comme composant de l'ensemble de détection (125) permettant de détecter l'information optique (119) appliquée sur l'article.

10. Ensemble de décodage (111) selon l'une des revendications précédentes qui concernent un ensemble de décodage (111), et comportant en outre au moins un article, en particulier un article médical (117) à usage unique, l'information optique (119) étant appliquée sur l'article.

11. Ensemble de décodage (111) selon l'une des revendications précédentes qui concernent un ensemble de décodage (111), dans lequel l'ensemble de détection (125) présente au moins un détecteur d'image (130) pour saisir des informations d'image bidimensionnelles, en particulier une puce CCD et/ou une puce CMOS.

12. Article médical (117) à usage unique, comportant au moins un code (118), le code (118) étant formé au moyen d'un procédé de codage selon l'une des revendications précédentes qui concernent un procédé de codage.

13. Article médical (117) à usage unique selon la revendication précédente, dans lequel l'article médical (117) à usage unique comporte au moins l'un des articles (117) à usage unique suivants :
- un élément de test (114; 154), en particulier une bande de test (114) ou un ruban de test (154), servant à détecter au moins un analyte, en particulier un métabolite, dans un échantillon, en particulier dans un liquide corporel et
- une lancette permettant de former un échantillon de liquide corporel.

14. Article médical (117) à usage unique selon l'une des deux revendications qui précèdent, le code (118) comportant au moins une information spécifique à l'article médical (117) à usage unique.

15. Article médical (117) à usage unique selon la revendication précédente, dans lequel l'article médical (117) à usage unique est un ruban de test (154) ou une bande de test (114) qui présente au moins un champ de test (116) permettant l'analyse d'au moins un liquide corporel, le champ de test étant appliqué sur un support (148) et le code (118) étant également appliqué sur le support (148).
